(19) Europäisches Patentamt / European Patent Office / Office européen des brevets

(11) **EP 3 167 196 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **15733631.4**

(22) Anmeldetag: **02.07.2015**

(51) Int Cl.:
*F04D 27/02* (2006.01)    *F04D 17/12* (2006.01)
*F04D 19/02* (2006.01)    *F25B 1/10* (2006.01)
*F25B 9/00* (2006.01)    *F25B 9/10* (2006.01)
*F25B 49/02* (2006.01)

(86) Internationale Anmeldenummer:
**PCT/EP2015/001342**

(87) Internationale Veröffentlichungsnummer:
**WO 2016/005038 (14.01.2016 Gazette 2016/02)**

(54) **VERFAHREN ZUR REGELUNG DER DREHZAHL VON SERIENGESCHALTETEN KRYOGENEN VERDICHTERN**

METHOD FOR REGULATING THE ROTATIONAL SPEED OF CRYOGENIC COMPRESSORS WHICH ARE CONNECTED IN SERIES

PROCÉDÉ DE RÉGULATION DE LA VITESSE DE ROTATION DE COMPRESSEURS CRYOGÉNIQUES CONNECTÉS EN SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2014 DE 102014010104**

(43) Veröffentlichungstag der Anmeldung:
**17.05.2017 Patentblatt 2017/20**

(73) Patentinhaber: **Linde AG**
**80331 Munich (DE)**

(72) Erfinder:
• **KÜNDIG, Andres**
**8953 Dietikon (CH)**
• **ÜRESIN, Can**
**8400 Winterthur (CH)**

(74) Vertreter: **Richmond, Sarah**
**The Linde Group**
**Priestley Centre**
**10 Priestley Road**
**Surrey Research Park**
**Guildford, Surrey GU2 7XY (GB)**

(56) Entgegenhaltungen:
DE-A1- 19 933 202     US-A- 4 640 665
US-A1- 2005 178 134

**Beschreibung**

Die Erfindung betrifft ein Verfahren zur Regelung von Drehzahlen von in Serie angeordneten Verdichtern, zur Verdichtung eines Fluids, insbesondere kryogenem Helium, gemäß Anspruch 1.

Derartige Verdichter, insbesondere Turboverdichter, sind aus dem Stand der Technik bekannt und weisen in der Regel eine Welle mit mindestens einem Laufrad (Verdichterrad) bzw. direkt mit der Welle verbundenen Laufschaufeln auf, mit denen das Fluid beim Rotieren der Welle verdichtet wird. Im Rahmen der vorliegenden Erfindung wird dabei unter der Drehzahl des Verdichters die Anzahl der vollständigen Rotationen (360°) der Welle um die Wellenachse pro Zeiteinheit verstanden. Verdichter, wie z.B. Turboverdichter, unterteilen sich insbesondere in Radial- und Axialverdichter. Beim Radialverdichter strömt das Fluid axial zur Welle ein und wird in radialer Richtung nach außen abgelenkt. Beim Axialverdichter hingegen strömt das zu verdichtende Fluid in paralleler Richtung zur Welle durch den Verdichter.

Verfahren zur Regelung von Drehzahlen von in Serie angeordneten Verdichtern sind bekannt, beispielsweise von den folgenden Patente bekannt: US2005178134, US4640665 und DE19933202

In einigen Kühlanlagen werden extreme Kühlungen zwischen 1,8K und 4K mit flüssigem und insbesondere mit suprafluidem Helium benötigt. Diese Temperaturen reichen in den sogenannten niedrigen kryogenen Temperaturbereich zwischen 1,8K und 2,2K hinein. Bei der Kühlung solcher Anlagen verdampft je nach Last an der Anlage eine unterschiedliche Menge an Helium. Gewöhnlich liegt der Dampfdruck solcher Anlagen zwischen 15mbar und 50mbar. Je nach Last, die an der Anlage anliegt, steigt oder fällt die Verdampfungsrate des zum Kühlen verwendeten Heliums, was zu unterschiedlichen Drücken über der flüssigen Phase des Heliums führt. Um den Dampfdruck auf einen annähernd konstant Wert einzustellen, werden sogenannte Verdichtersysteme verwendet, die gewöhnlich über eine Reihe von Radial- und/ oder Turboverdichtern, auch Turbokompressoren genannt, verfügen. Turboverdichter haben ein Kennfeld, welches bei gegebener Drehzahl und gegebenem Saugzustand am Eingang des Verdichters den Massenstrom nach unten und oben begrenzt. Die obere Grenze ist durch das Erreichen der Machzahl 1 im Innern des Schaufelgitters des Verdichters gegeben. Diese Grenze wird als Sperr-Kennlinie (englisch: choke) im Kennfeld bezeichnet. Im Choke- oder Sperr-Betrieb sinkt der Wirkungsgrad eines Verdichters massiv. Die untere Begrenzung ist durch das Abreißen der Strömung des Massenstroms an den Schaufelkanten des Verdichters definiert, was sich durch Vibration manifestiert und zu einem - unerwünschten - sofortigen Druckausgleich über dem Verdichter führt. Dieses Phänomen wird als Pumpen (englisch: surge) bezeichnet. Die entsprechende Linie im Kennfeld des Verdichters wird als Pump-Kennlinie bzw. Surge-Kennlinie bezeichnet. Eine Rückkehr aus dem Pumpzustand in den normalen Betriebszustand ist dann durch ein Bypass möglich, der dem jeweiligen Verdichter einen ausreichend großen Massenstrom zur Verfügung stellt, so dass er wieder innerhalb des Kennfeldes arbeitet. Dennoch ist dieser Effekt unerwünscht, da die Wirtschaftlichkeit der Anlage dadurch negativ beeinflusst wird.

Eine Regelung von in Serie geschalteten Verdichtern ist insbesondere deswegen schwierig, da die Regelung eines Verdichters Einfluss auf den Zustand / Regelbedarf des nachfolgenden Verdichters hat. Temperatur- und Druckschwankungen am Systemeintritt können sich von Stufe zu Stufe verstärken, also vom vorangehenden zum nachgeschalteten Verdichter. Weiterhin arbeiten Verdichtersysteme bei Saugtemperaturen um ca. 4K. Bei dieser Temperatur ist die spezifische Wärme von Metall sehr gering und daher können Temperaturschwankungen in solchen, aus Metall gefertigten Verdichtern sehr rasch auftreten. Da diese Temperaturschwankungen allerdings hochgradig störungsrelevant sind, erhöht sich die Schwankungsanfälligkeit solcher Verdichtersysteme markant.

Radiale Verdichter in Serie werden in verschiedenen Anwendungen zur Überwindung größerer Druckverhältnisse eingesetzt. Jeder Verdichter in der Serie hat sein eigenes Kennfeld (auch Betriebsfeld genannt) und muss so geregelt werden, dass er in seinem Kennfeld möglichst effizient und sicher läuft. Wenn ein Verdichter in Serie beispielsweise durch Veränderung seiner Drehzahl geregelt wird, ändern sich andere Faktoren/ Zustände um diesen Verdichter, wie beispielsweise der Ansaugdruck oder der Massenstrom etc., wodurch die Zustände um andere Verdichter der Serie beeinflusst werden. Um den Einfluss von Betriebspunktschwankungen zu glätten, wandeln die Drehzahlregelungen von Turboverdichtern die realen Werte in sogenannte reduzierte Werte um. Reduzierte Werte werden durch passende Normierung dimensionsloser Größen erzeugt. So kann beispielsweise ein dimensionsloser reduzierter Massenstrom ermittelt werden, der beispielsweise für Modellrechnungen vorteilhaft ist. Ebenso kann die Größe der Drehzahl in eine reduzierte Drehzahl umgewandelt werden. Zur Berechnung dieser reduzierten Größen benötigt man die Größe an sich (also beispielsweise den Massenstrom oder die Drehzahl des Verdichters), die Temperatur, den Druck und die Auslegungswerte (oder auch Designpunkte) der Verdichter. Die Auslegungswerte sind die Betriebszustände eines Verdichters, bei denen der Verdichter mit größter Effizienz (am wirtschaftlichsten) arbeitet. Verdichter weisen Auslegungswerte beispielsweise bezüglich der Drehzahl, des Massenstroms, der Temperatur und des Drucks über dem jeweiligen Verdichter auf. Ziel ist es, die Verdichter der Serie nahe an ihren Designpunkten zu betreiben. In diversen Turbomaschinenzeitschriften und Büchern wird die Berechnung von reduzierten Werten beschrieben (z.B. "Design of Radial Turbomachines - A. Whitfield, N.C. Baines").

Ein solches mehrstufiges, kryogenes Turboverdichtersystem muss über eine sehr effiziente Regelung gesteuert werden, damit es stabil und unterbrechungsfrei laufen kann.

Eine solche Regelung muss in der Lage sein, jeden Verdichter so zu steuern, dass er einerseits stabil und wirtschaftlich in seinem Kennfeld gefahren wird, und außerdem muss die Regelung so gestaltet sein, dass gleichzeitig auch alle anderen Verdichter in der Serie in stabilen und wirtschaftlichen Betriebszuständen operieren.

Diese Aufgabe wird durch das erfindungsgemäße Verfahren gelöst, welches die folgenden Schritte umfasst:

- Vorgeben eines Soll-Eintrittsdrucks, den das Fluid an einem Eingang des am weitesten stromauf angeordneten Verdichters aufweisen soll,
- Erfassen eines Ist-Eintrittsdrucks des Fluids an dem Eingang des am weitesten stromauf angeordneten Verdichters,
- Erfassen eines Ist-Austrittsdrucks des Fluids an einem Ausgang des am weitesten stromab angeordneten Verdichters,
- Ermittlung eines Ist-Gesamtdruckverhältnisses, wobei das Ist-Gesamtdruckverhältnis dem Quotienten aus dem Ist-Austrittsdruck von dem am weitesten stromab angeordneten Verdichters und dem Ist-Eintrittsdruck von dem am weitesten stromauf angeordneten Verdichters entspricht,
- Bestimmung eines Proportional-Integral-Wertes aus der Abweichung des Ist-Eintrittsdrucks von dem Soll-Eintrittsdruck,
- Bestimmung eines Kapazitätsfaktors aus dem Proportional-Integral-Wert und dem Ist-Gesamtdruckverhältnis,
- Ermittlung eines Modell-Gesamtdruckverhältnisses aus dem Ist-Gesamtdruckverhältnis und dem Kapazitätsfaktor,
- Bestimmung einer reduzierten Soll-Drehzahl für jeden Verdichter, wobei die jeweilige reduzierte Soll-Drehzahl als Funktionswert einer dem jeweiligen Verdichter zugeordneten Regelungsfunktion bestimmt wird, die jedem Wertepaar aus Kapazitätsfaktor und Modell-Gesamtdruckverhältnis, eine reduzierte Soll-Drehzahl zuordnet, und
- Bestimmen einer Soll-Drehzahl zu jeder reduzierten Soll-Drehzahl und Einstellen der Drehzahl jedes Verdichters auf die für den jeweiligen Verdichter bestimmte Soll-Drehzahl.

Bei dem erfindungsgemäßen Verfahren ist es besonders vorteilhaft, dass eine Schwankung des Drucks am Ausgang des am weitesten stromab angeordneten Verdichters nicht an den Eingang des Verdichtersystems weitergeleitet wird, d.h. sie wird durch die Regelung gedämpft, wodurch insbesondere ein Experiment, welches diese tiefen Temperaturen benötigt, beispielsweise durch den Einsatz supraleitender Magnetspulen geschützt wird und die Kühlung bei konstanter Temperatur gewährleistet ist.

Besonders vorteilhaft bei dieser Art der Regelung ist, dass die gesamte Verdichterserie insbesondere mit nur zwei Regel-Größen gesteuert wird, nämlich dem Kapazitätsfaktor und dem Modell-Gesamtdruckverhältnis.

Das Modell-Gesamtdruckverhältnis wird aus dem Ist-Gesamtdruckverhältnis berechnet und dient insbesondere dazu, die Betriebszustände der Verdichter regeln zu können, auch wenn der Kapazitätsfaktor an seinem maximalen bzw. minimalen Wert liegt, also in Sättigung ist. Diese Grenzen werden beispielsweise durch die Pump- bzw. Sperr-Betriebszustände gesetzt. Ein niedriger Kapazitätsfaktor soll insbesondere Betriebszustände nahe von Pump-Zuständen bewirken, wohingegen ein hoher Kapazitätsfaktor insbesondere Betriebszustände nahe der Sperr-Zustände bewirken soll.

Beispielsweise kann man dem Kapazitätsfaktor 0 alle Betriebszustände zuordnen, die auf der Pump-Kennlinie liegen oder die nahe der Pump-Kennlinie liegen und einem Kapazitätsfaktor von 1 alle Betriebszustände, die insbesondere auf oder nahe bei der Sperr-Kennlinie liegen. Diese Betriebszustände sind allerdings unerwünscht, so dass der Wertebereich des Kapazitätsfaktors üblicherweise beschränkt wird, so dass weder Pump- noch Sperr-Betriebszustände erreicht werden können. Ein typischer Wertebereich des Kapazitätsfaktors erstreckt sich insbesondere von 0,05 bis 0,9. Als Ist-Drücke werden hier insbesondere die momentan am Eingang bzw. Ausgang des jeweiligen Verdichters herrschenden Drücke bezeichnet.

Die in Serie angeordneten Verdichter verdichten das Fluid sukzessive entlang einer Strömungsrichtung, die in Richtung steigender Drücke verläuft. Über geeignete Instrumente oder Verfahren können sowohl die Ist-Drücke als auch die Temperaturen an den Verdichtern erfasst werden, wobei insbesondere die Temperaturen an dem jeweiligen Eingang der Verdichter notwendig sind, um die reduzierten Größen, wie beispielsweise die reduzierte Soll-Drehzahl zu berechnen. Weiterhin kann in üblicher Weise, insbesondere unter Verwendung eines sogenannten PI-Reglers, der Proportional-Integral-Wert bestimmt werden. Dazu wird einerseits ein sogenannter Proportionalwert und andererseits ein Integralwert berechnet, wobei der Proportionalwert insbesondere der Differenz aus Soll- und Ist-Eintrittsdruck proportional ist und der Integralwert insbesondere über eine Integration über alle oder einige in der Vergangenheit erfasste Proportionalwerte berechnet wird.

Eine reduzierte Soll-Drehzahl oder eine reduzierte Drehzahl ist wie oben als reduzierte Größe zu verstehen. Zur Umrechnung in eine dimensionsbehaftete (absolute Steuer-) Größe muss diese reduzierte Größe zunächst wieder zurücktransformiert werden. Dies geschieht anhand von weiter unten aufgeführten Formeln.

Jedem Verdichter ist eine Regelungsfunktion zugeordnet, welche aus dem Ist-Gesamtdruckverhältnis und aus dem Kapazitätsfaktor die erforderliche reduzierte Soll-Drehzahl ermittelt. Grundlage jeder Regelungsfunktion sind die Gesamtheit aller Verdichtercharakteristika sowie die Kompressibilität des zu verdichtenden Fluids. In die Regelungsfunktion geht bevorzugt die Annahme mit ein, dass das Fluid auf dem gesamten Temperatur- und Druckbereich der Verdichterserie der Idealgasgleichung genügt:

$$pV = RT$$

In einer vorteilhaften Ausführungsform der Erfindung ist vorgesehen, dass der Proportional-Integral-Wert maximal so groß wie die Summe aus dem Logarithmus eines Design-Gesamtdruckverhältnisses und einem Sperr-Kapazitätsfaktor werden kann, wobei der Sperr-Kapazitätsfaktor insbesondere bei 1 liegt und wobei das Design-Gesamtdruckverhältnis das Gesamtdruckverhältnis ist, das sich ergibt, wenn alle Verdichter der Serie an ihrem Designpunkt betrieben werden, wobei der Designpunkt eines Verdichters insbesondere den Betriebszustand (beispielsweise gegeben durch einen Punkt im Kennfeld des Verdichters) definiert, bei dem der Verdichter den höchsten Wirkungsgrad aufweist.

Der Sperr-Kapazitätsfaktor ist insbesondere der Kapazitätsfaktor, der einen Verdichter nahe bei oder auf einem Sperr-Betriebszustand bzw. einer Sperr-Kennlinie fahren würde.

In einer vorteilhaften Ausführungsform der Erfindung entspricht der Kapazitätsfaktor der Differenz aus dem Proportional-Integral-Wert und dem natürlichen Logarithmus des Ist-Gesamtdruckverhältnisses. Dies ist insbesondere dann der Fall, wenn die Regelung der Verdichter in einem Bereich stattfindet, in dem der Kapazitätsfaktor nicht in Sättigung ist.

Vorzugsweise ist ein Maximal- und Minimalwert für den Kapazitätsfaktor definiert, wobei insbesondere der Maximalwert zwischen 0,8 und 1 liegt, bevorzugt bei 0,9 und / oder wobei der Minimalwert bevorzugt zwischen 0 und 0,1, bevorzugt bei 0,05 liegt.

In einer weiteren Variante der Erfindung ist vorgesehen, dass das Modell-Gesamtdruckverhältnis dem Ist-Gesamtdruckverhältnis multipliziert mit einer vom Kapazitätsfaktor abhängigen Sättigungsfunktion gleich ist, wobei die Sättigungsfunktion insbesondere 1 ist, wenn der Kapazitätsfaktor zwischen dem Minimal- und Maximalwert liegt, und wobei die Sättigungsfunktion insbesondere durch eine Exponential-Funktion der Differenz des Kapazitätsfaktors und des Minimalwerts gebildet wird, wenn der Kapazitätsfaktor kleiner als der Minimalwert ist, und wobei die Sättigungsfunktion insbesondere durch eine Exponential-Funktion der Differenz des Kapazitätsfaktors und des Maximalwerts gegeben ist, wenn der Kapazitätsfaktor größer als der Maximalwert ist.

Für die Darstellung und die Berechnungen wird insbesondere der natürliche Logarithmus des jeweiligen Gesamtdruckverhältnisses anstelle des Gesamtdruckverhältnisses verwendet. Dies ist eine vollkommen äquivalente Darstellung.

Das Modell-Gesamtdruckverhältnis kann also formelmäßig wie folgt dargestellt werden:

$$\ln(\pi_{Model}) = \ln(\pi_{ist})$$

Dies gilt insbesondere, wenn der Kapazitätsfaktor zwischen dem Minimal- und Maximalwert liegt, wobei $\pi_{Model}$ das Modell-Gesamtdruckverhältnis und $\pi_{ist}$ das Ist-Gesamtdruckverhältnis ist.

Die Sättigungsfunktion SF kann für Werte des Kapazitätsfaktors, die nicht zwischen dem Minimal- und dem Maximalwert liegen, beispielsweise durch

$$SF = \exp(0,5*(X-X_{max})) \text{ für } X > X_{max}$$

bzw.

$$SF = \exp(0,5*(X-X_{min})) \text{ für } X < X_{min}$$

gegeben sein, wobei X der Kapazitätsfaktor ist, und $X_{min}$ der Minimalwert und $X_{max}$ der Maximalwert des Kapazitätsfaktors ist. Damit ergibt sich:

$$\pi_{Model} = \pi_{ist}*SF \quad <=> \quad \ln(\pi_{Model}) = \ln(\pi_{ist}) + 0,5*(X-X_{min/max})$$

Diese Modifikation des Modell-Gesamtdruckverhältnisses stellt sicher, dass in Betriebszuständen, in denen der Kapazitätsfaktor in Sättigung ist, die Regelung dennoch weiter Einfluss auf die Verdichter hat, da dann anstelle des Kapazitätsfaktors das Modell-Gesamtdruckverhältnis verändert wird, womit die Regelungsfunktion reduzierte Soll-Drehzahlen aufrufen kann, die aus diesen Betriebszuständen herausführen.

In einer besonders bevorzugten Ausführungsform der Erfindung, wird der Kapazitätsfaktor dem Maximalwert gleichgesetzt (insbesondere nachdem das Modell-Gesamtdruckverhältnis bestimmt wurde), wenn der Kapazitätsfaktor größer als der Maximalwert ist. Weiterhin wird, wenn der Kapazitätsfaktor kleiner als der Minimalwert ist, der Kapazitätsfaktor bevorzugt dem Minimalwert gleichgesetzt (und zwar insbesondere nachdem das Modell-Gesamtdruckverhältnis bestimmt wurde). Dies dient insbesondere dazu, dass keine Kapazitätsfaktoren an die Regelungsfunktion gegeben werden, die u.U. schädlich für den Betrieb der Verdichter wären. Es gilt in diesen Fällen also insbesondere

$$X=X_{min} \text{ bzw. } X=X_{max}.$$

In einer Variante der Erfindung ist die Austrittstemperatur des Fluids am Ausgang des jeweiligen Verdichters gleich der Eintrittstemperatur des Fluids am Eingang des jeweils stromab des jeweiligen Verdichters angeordneten Verdichters der Serie, und der Austrittsdruck des Fluids am Ausgang des jeweiligen Verdichters ist im Wesentlichen gleich dem Eintrittsdruck des Fluids am Eingang des jeweils stromab des jeweiligen Verdichters angeordneten Verdichters der Serie. Abweichungen zwischen den besagten Temperaturen können beispielsweise aufgrund von Wärmeeinwirkung durch die Umgebung etc. zustande kommen. Abweichungen zwischen den besagten Drücken können sich beispielweise aufgrund von Druckverlusten entlang der Rohrleitungen ergeben.

In einer bevorzugten Ausführungsform der Erfindung ist vorgesehen, dass die Austrittstemperatur und der Austrittsdruck für jeden Verdichter aus dem Eintrittsdruck und der Eintrittstemperatur des am weitesten stromauf angeordneten Verdichters der Serie insbesondere mit Hilfe einer Turbomaschinengleichung ermittelt und insbesondere vorberechnet wird, so dass insbesondere die reduzierte Drehzahl für jeden Verdichter und ein reduzierter Massenstrom durch den jeweiligen Verdichter als Funktion des Gesamtdruckverhältnisses und insbesondere des Kapazitätsfaktors ermittelt werden, wobei das Gesamtdruckverhältnis, analog zum Ist-Gesamtdruckverhältnis, durch den Quotient aus dem Austrittsdruck des am weitesten stromab angeordneten Verdichters und dem Eintrittsdruck des am weitesten stromauf angeordneten Verdichters der Serie gegeben ist. Durch das Erstellen einer Tabelle (so genannter look-up table) wird die Ermittlung von reduzierten Soll-Drehzahlen im laufenden Betrieb stark vereinfacht.

Der reduzierte Massenstrom ist, wie die reduzierte Drehzahl, eine reduzierte Größe, die implizit durch eine Transformation des (realen oder absoluten) Massenstromes auch die Temperatur des Massenstromes enthält. Der reduzierte Massenstrom kann sich also insbesondere als Funktion der Temperatur ändern. Turbomaschinengleichungen sind Strömungsgleichungen, die speziell für die Beschreibung von Strömungen in Turbomaschinen geeignet sind, worunter auch Verdichter fallen. Diese Turbomaschinengleichungen sind sogenannte Eulersche-Gleichungen, insbesondere Eulersche-Turbomaschinen-Gleichungen oder auch Eulerschen Turboverdichter-Gleichungen.

Bevorzugt werden insbesondere fünf Kapazitätslinien für jeden Verdichter festgelegt, wobei jede Kapazitätslinie für jeden Verdichter eine Funktion des Gesamtdruckverhältnisses und insbesondere eine Funktion des reduzierten Massenstromes und der reduzierter Drehzahl des jeweiligen Verdichters ist, und wobei der Kapazitätsfaktor entlang der jeweiligen Kapazitätslinie für jeden Verdichter insbesondere konstant ist.

In einer bevorzugten Variante der Erfindung ermittelt die Regelungsfunktion die reduzierte Soll-Drehzahl für jeden Verdichter aus einer vorberechneten Tabelle, wobei die Tabelle für jeden Kapazitätsfaktor, der auf einer Kapazitätslinie liegt und für jedes Gesamtdruckverhältnis, die jeweilige reduzierte Drehzahl aufweist, und wobei insbesondere für Kapazitätsfaktoren sowie für Gesamtdruckverhältnisse, die nicht in der Tabelle aufgelistet sind, die entsprechenden Werte für die reduzierten Drehzahlen des jeweiligen Verdichters durch eine Interpolationsmethode ermittelt werden. Eine solche Interpolationsmethode ist beispielsweise eine "nächste Nachbar"-Interpolation. Eine solche Tabelle kann in diesem Zusammenhang insbesondere auch als Funktion aufgefasst werden. Alternativ kann die Regelungsfunktion auch durch Polynome gegeben sein, bei der die Polynome insbesondere den Verlauf der Kapazitätslinien definieren.

Bevorzugt weisen die Kapazitätslinien diejenigen Wertepaare aus reduziertem Massenstrom und reduzierter Drehzahl auf, die bewirken, dass sich der Ist-Eintrittsdruck dem Soll-Eintrittsdruck angleicht, wenn die Regelungsfunktion aus dem Modell-Gesamtdruckverhältnis und dem Kapazitätsfaktor eine reduzierte Soll-Drehzahl für jeden Verdichter, insbesondere aus der vorberechneten Tabelle, ermittelt und die Regelung mit den ermittelten reduzierten Drehzahlen durchgeführt wird.

In einer bevorzugten Ausführungsform sind die Kapazitätslinien zwischen einer Pump- und Sperr-Kennlinie angeordnet, wobei die Pump-Kennlinie Betriebszustände des jeweiligen Verdichters umfasst, bei denen - bei gegebener reduzierter Drehzahl und einem gegebenen reduzierten Massenstrom - ein zu erreichendes Einzel-Druckverhältnis nicht aufrechterhalten werden kann, und wobei die Sperr-Kennlinie Betriebszustände des Verdichters umfasst, bei denen - bei einer bestimmten reduzierter Soll-Drehzahl des jeweiligen Verdichters - eine Verringerung des jeweiligen Einzel-Druckverhältnisses keinen erhöhten reduzierten Massenstrom durch den jeweiligen Verdichter nach sich zieht. Das Einzel-Druckverhältnis eines Verdichters entspricht dabei dem Quotient aus dem Austrittsdruck am Ausgang des jeweiligen Verdichters und dem Eintrittsdruck am Eingang des jeweiligen Verdichters.

Weitere Einzelheiten und Vorteile der Erfindung sollen durch die nachfolgenden Figurenbeschreibungen von Ausführungsbeispielen anhand der Figuren erläutert werden.

Es zeigen

Fig 1: Kennfeld mit Kapazitätslinien eines ersten Verdichters, der am weitesten stromauf von vier in Serie geschalteten Verdichtern angeordnet ist;

Fig 2: Kennfeld mit Kapazitätslinien eines zweiten Verdichters, der stromab des ersten Verdichters angeordnet ist;

Fig 3: Kennfeld mit Kapazitätslinien eines dritten Verdichters, der stromab des zweiten Verdichters angeordnet ist;

Fig 4: Kennfeld mit Kapazitätslinien eines vierten Verdichters, der stromab des dritten Verdichters angeordnet ist;

Fig. 5: Steuerfeld mit den Kapazitätslinien aus Fig. 1 für den ersten Verdichter;

Fig. 6: Steuerfeld mit den Kapazitätslinien aus Fig. 2 für den zweiten Verdichter;

Fig. 7: Steuerfeld mit den Kapazitätslinien aus Fig. 3 für den dritten Verdichter;

Fig. 8: Steuerfeld mit den Kapazitätslinien aus Fig. 4 für den vierten Verdichter;

Fig. 9: Kennfeld mit gleichverteilten Kapazitätslinien des ersten Verdichters der in Serie geschalteten Verdichter;

Fig 10: Kennfeld mit gleichverteilten Kapazitätslinien des zweiten Verdichters;

Fig 11: Kennfeld mit gleichverteilten Kapazitätslinien des dritten Verdichters;

Fig 12: Kennfeld mit gleichverteilten Kapazitätslinien des vierten Verdichters;

Fig. 13: Steuerfeld mit den Kapazitätslinien aus Fig. 9 für den ersten Verdichter;

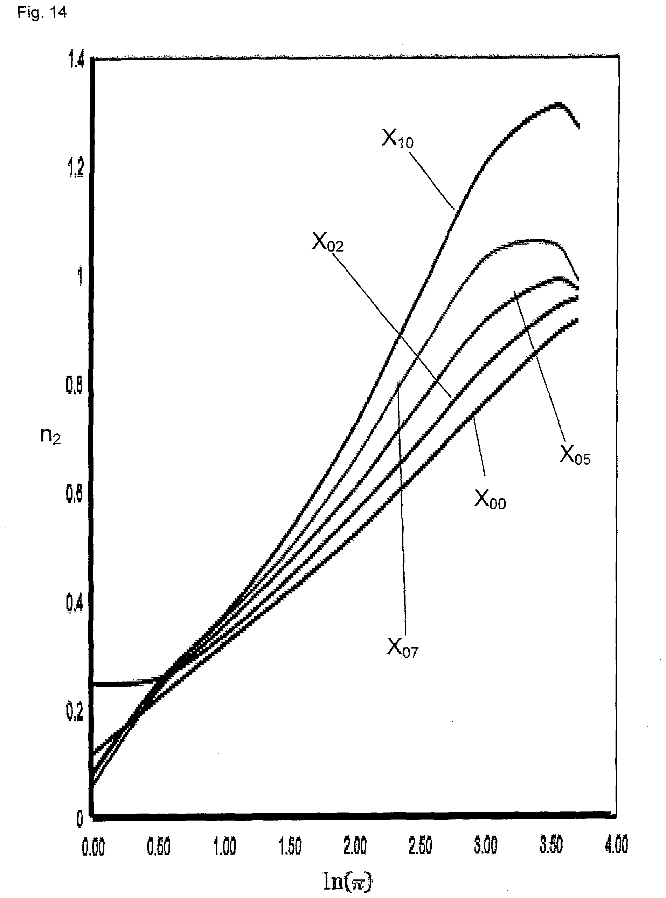

Fig. 14: Steuerfeld mit den Kapazitätslinien aus Fig. 10 für den zweiten Verdichter;

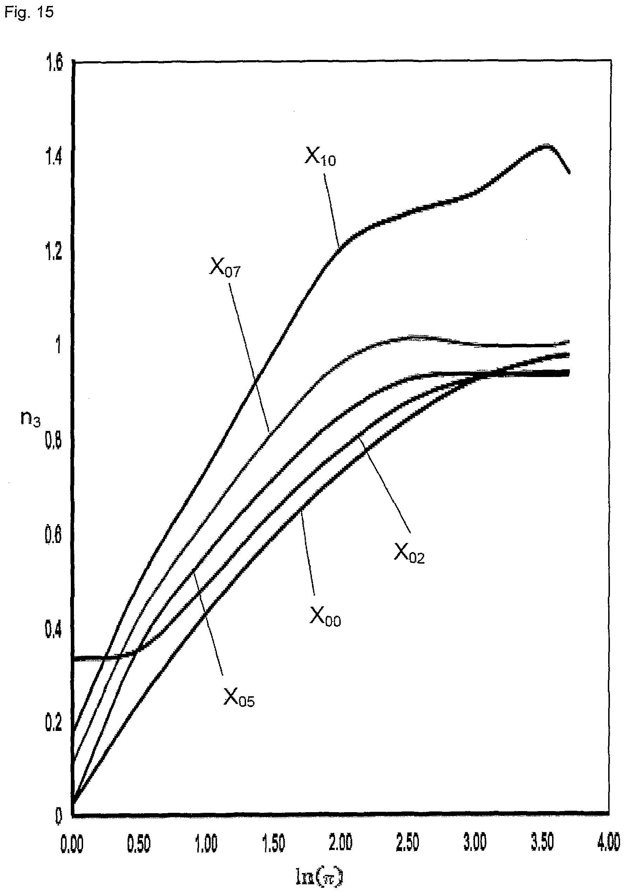

Fig. 15: Steuerfeld mit den Kapazitätslinien aus Fig. 11 für den dritten Verdichter;

Fig. 16: Steuerfeld mit den Kapazitätslinien aus Fig. 12 für den vierten Verdichter;

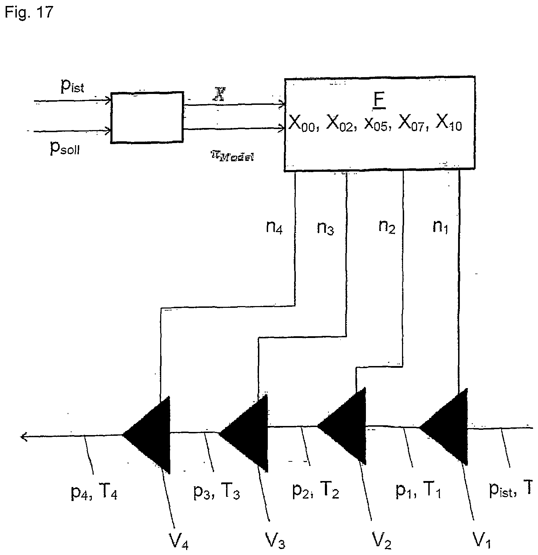

Fig. 17: Schaltdiagramm zur Durchführung des erfindungsgemäßen Verfahrens;

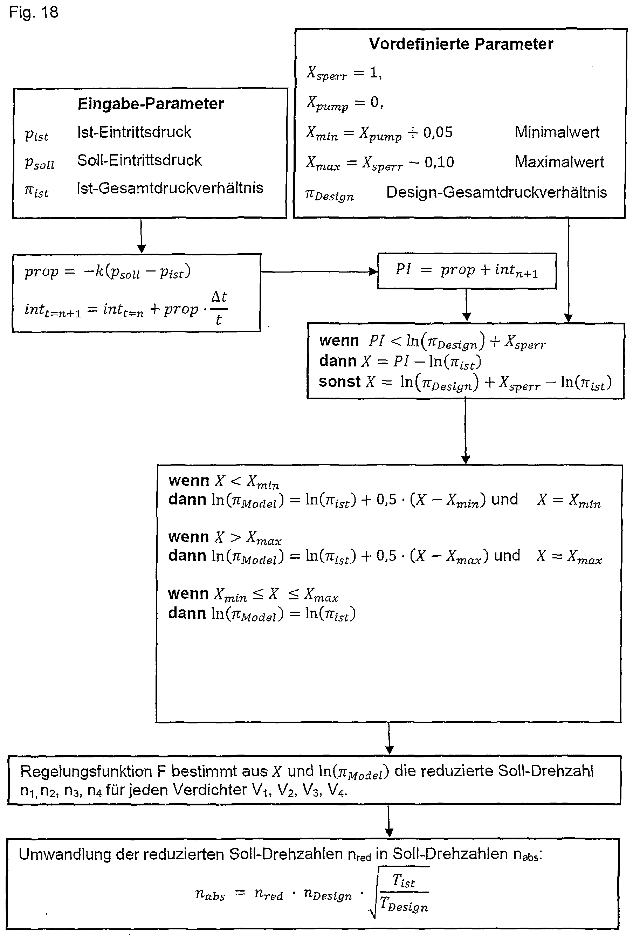

Fig. 18: Flussdiagramm für die Ermittlung des Kapazitätsfaktors und des Modell-Gesamtdruckverhältnisses.

Fig. 19: Ermittlung einer Kapazitätslinie im Kennfeld von Verdichter $V_1$

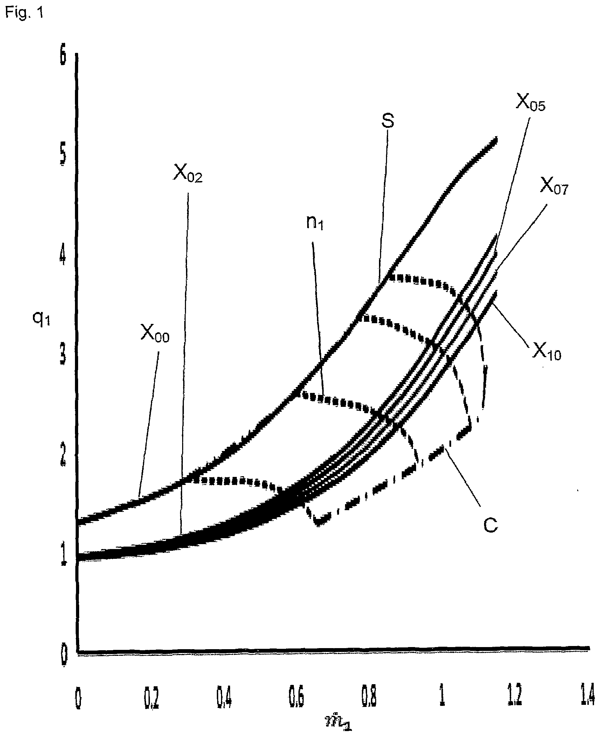

In den Figuren 1 bis 4 sind Kennfelder von vier in Serie geschalteten Verdichtern $V_1$, $V_2$, $V_3$, $V_4$ zur Verdichtung von kryogenem Helium im Bereich um 4K dargestellt. Das erfindungsgemäße Verfahren kann auch zur Regelung von mehr oder weniger als vier Verdichtern angewendet werden, je nachdem welches Gesamtdruckverhältnis erzeugt werden soll. Im Folgenden wird beispielhaft eine Serienanordnung von vier Verdichtern $V_1$, $V_2$, $V_3$, $V_4$ erörtert.

Das Kennfeld eines Verdichters stellt Betriebszustände des Verdichters dar, die jeweils durch einen reduzierten Massenstrom und einem diesem reduzierten Massenstrom zugeordneten Einzel-Druckverhältnis beschreibbar sind, wobei jedem Betriebszustand im Kennfeld eine reduzierte Soll-Drehzahl zugeordnet ist, die zum Erreichen des Betriebszustandes erforderlich ist.

So ein Kennfeld ist für jeden Verdichter erstellbar oder vorhanden. Ein Kennfeld kann erstellt werden, indem eine Vielzahl von verschiedenen Betriebszuständen gemessen werden und somit das Kennfeld charakterisiert wird, oder auch durch eine geeignete Software, die den Verdichter virtuell darstellen kann.

Im sogenannten Gleichgewichtsbetrieb, wenn also die Anlage im vorgesehenen Zustand arbeitet, wird das Helium z.B. von ca. 15 mbar auf 600 mbar verdichtet. Das heißt, um den Designpunkt (Betriebszustand, für den die Verdichterserie bzw. das Verdichtersystem ausgelegt ist) weist das Verdichtersystem ein Gesamtdruckverhältnis von ca. 40 (600 mbar/15 mbar) auf.

In jedem Kennfeld der vier Figuren 1-4 sind fünf Kapazitätslinien $X_{00}$, $X_{02}$, $X_{05}$, $X_{07}$, $X_{10}$ eingezeichnet, die den Kapazitätsfaktor X = 0 ($X_{00}$), 0,25 ($X_{02}$), 0,5 ($X_{05}$), 0,75 ($X_{07}$), und 1 ($X_{10}$) umfassen. Die Verteilung dieser Linien $X_{00}$, $X_{02}$, $X_{05}$, $X_{07}$, $X_{10}$ ist für jeden Verdichter $V_1$, $V_2$, $V_3$, $V_4$ der Serie anders. Die spezifische Verteilung der Kapazitätslinien $X_{00}$, $X_{02}$, $X_{05}$, $X_{07}$, $X_{10}$ im jeweiligen Kennfeld des Verdichters gewährleistet, dass eine Erhöhung des Kapazitätsfaktors X im Allgemeinen zu einer Erhöhung der gesamten Pumpleistung führt, so dass ein stabiler Anlagenbetrieb gewährleistet ist. Die querlaufenden gestrichelten Linien repräsentieren Zustände, die die gleichen reduzierten Drehzahlen $n_1$, $n_2$, $n_3$, $n_4$ (englisch: reduced speed) des jeweiligen Verdichters $V_1$, $V_2$, $V_3$, $V_4$ aufweisen.

Im Betrieb einer Anlage gemäß dem erfindungsgemäßen Verfahren, werden die Verdichter $V_1$, $V_2$, $V_3$, $V_4$ auf den gleichen Kapazitätslinien $X_{00}$, $X_{02}$, $X_{05}$, $X_{07}$ $X_{10}$ in dem jeweils dem entsprechenden Verdichter zugeordneten Kenn- bzw. Steuerfeld gefahren. D.h. alle Verdichter werden mit dem gleichen Kapazitätsfaktor X gefahren.

Es gilt weiterhin, dass der Austrittszustand, insbesondere der Austrittsdruck $p_1$ und die Austrittstemperatur $T_1$, des ersten Verdichters $V_1$ den Eintrittszustand des zweiten Verdichters $V_2$ darstellt. Der Austrittszustand des zweiten Verdichters $V_2$ stellt den Eintrittszustand des dritten Verdichters $V_3$ dar, und der Austrittszustand des dritten Verdichters $V_3$ wiederum stellt den Eintrittszustand des vierten Verdichters $V_4$ dar.

Das Produkt der Einzeldruckverhältnisse $q_1$, $q_2$, $q_3$, $q_4$ bildet das Ist-Gesamtdruckverhältnis $\pi_{ist}$. Durch Variation des Kapazitätsfaktors X verändert sich die Verteilung des Ist-Gesamtdruckverhältnisses $\pi_{ist}$ über der Verdichterserie. Mit anderen Worten nehmen unterschiedliche Kapazitätsfaktoren X Einfluss auf die Verteilung der Einzeldruckverhältnisse $q_1$, $q_2$, $q_3$, $q_4$ über den jeweiligen Verdichtern $V_1$, $V_2$, $V_3$, $V_4$, die sich je nach Kapazitätsfaktor X anders zusammensetzen, wodurch sich der gemeinsame Massenstrom durch alle Verdichter $V_1$, $V_2$, $V_3$, $V_4$ der Serie ändert.

Figur 1 zeigt das Kennfeld des ersten Verdichters $V_1$ der Serienanordnung der vier Verdichter $V_1$, $V_2$, $V_3$, $V_4$ mit den fünf Kapazitätslinien $X_{00}$, $X_{02}$, $X_{05}$, $X_{07}$, $X_{10}$. Die Kapazitätslinie $X_{00}$ liegt auf der Pump-Kennlinie S. Damit ein stabiler Betrieb des Verdichters $V_1$ gewährleistet ist, und der Verdichter $V_1$ nicht in den Pump-Zustand S gefahren wird, wird der Kapazitätsfaktor X, der an die Regelungsfunktion F übergeben wird, gegebenenfalls auf einen Minimalwert $X_{min}$ von 0,05 limitiert. Die Kapazitätslinie $X_{10}$ liegt in der Nähe jedoch nicht auf der Sperr(englisch: Choke)-Kennlinie C des Verdichters $V_1$.

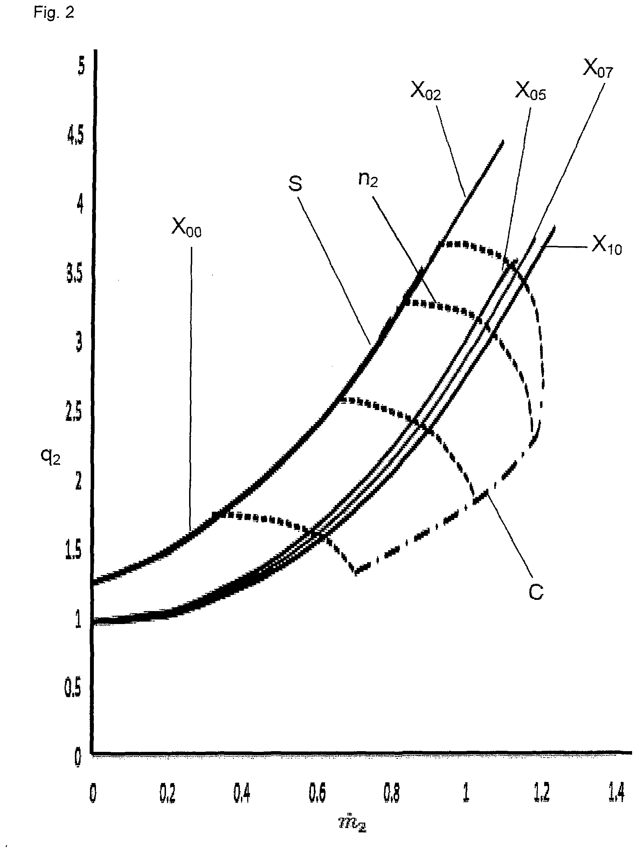

Figur 2 zeigt das Kennfeld des zweiten Verdichters $V_2$ der in Serie angeordneten Verdichter $V_1$, $V_2$, $V_3$, $V_4$. Auch hier liegt die Kapazitätslinie $X_{00}$ auf der Pump-Kennlinie S und die Kapazitätslinien $X_{05}$, $X_{07}$ und $X_{10}$ verlaufen ähnlich wie im Kennfeld des Verdichters $V_1$ Nur die Kapazitätslinie $X_{02}$ verläuft hier weiter links, nahe bei der Kapazitätslinie $X_{00}$.

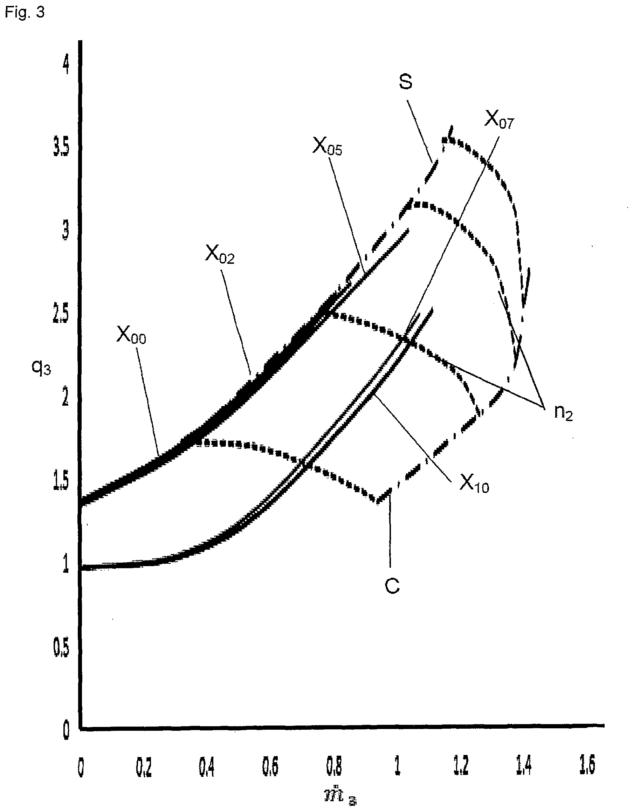

In Figur 3 ist das Kennfeld des dritten Verdichters $V_3$ der in Serie angeordneten Verdichter $V_1$, $V_2$, $V_3$, $V_4$ dargestellt. Auch die Kapazitätslinie $X_{05}$ verläuft hier im linken Bereich des Kennfeldes.

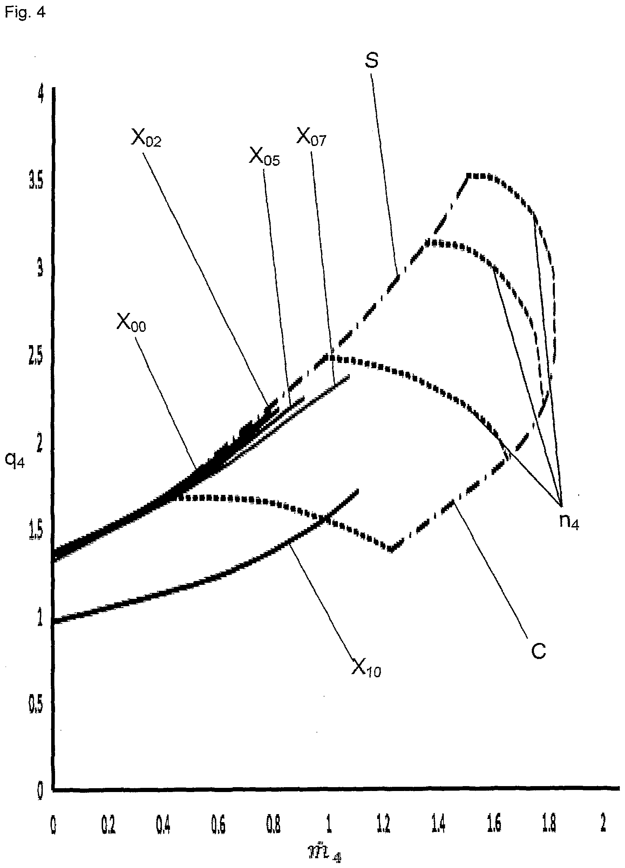

Figur 4 zeigt das Kennfeld des vierten Verdichters $V_4$ der in Serie angeordneten Verdichter $V_1$, $V_2$, $V_3$, $V_4$ des Verdichtersystems. Hier liegt nur noch die Kapazitätslinie $X_{10}$ im rechten Bereich des Kennfeldes. Die Kapazitätslinien $X_{00}$, $X_{02}$, $X_{05}$, $X_{07}$ sind um die Pump-Kennlinie S konzentriert. Die reduzierten Soll-Drehzahlen $n_1$, $n_2$, $n_3$, $n_4$ für diese Kapazitätsfaktoren werden vergleichsweise nahe an der sogenannten Surge-Drehzahl, also der reduzierten Drehzahl $n_4$, bei der der Verdichter $V_4$ in den Pump-Zustand fährt, berechnet. Um einen stabilen Betrieb des Verdichters $V_4$ zu gewährleisten, werden diese reduzierten Soll-Drehzahlen $n_4$ auf einen Bereich zwischen 90%-95% der Surge-Drehzahl beschränkt.

Die beschriebene Verteilung der Kapazitätslinien $X_{00}$, $X_{02}$, $X_{05}$, $X_{07}$, $X_{10}$ im Kenn- bzw. Steuerfeld für jeden Verdichter $V_1$, $V_2$, $V_3$, $V_4$ bewirkt, dass bei geringem Ist-Gesamtdruckverhältnis $\pi_{ist}$ nur der letzte Verdichter $V_4$ stromabwärts zur Erzeugung des Ist-Gesamtdruckverhältnisses $\pi_{ist}$ beiträgt. Alle vorangehenden Verdichter $V_1$, $V_2$, $V_3$ drehen gerade so schnell, dass sie keinen Strömungswiderstand erzeugen.

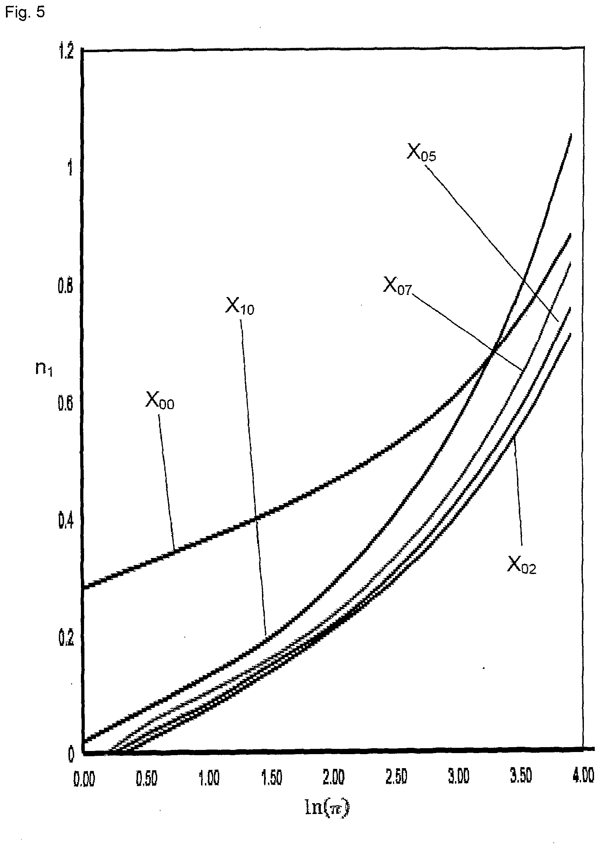

Figuren 5 bis 8 zeigen Steuerfelder der Verdichter $V_1$, $V_2$, $V_3$, $V_4$. Im Steuerfeld ist die reduzierte Drehzahl $n_1$, $n_2$, $n_3$, $n_4$ als Funktion des natürlichen Logarithmus des Gesamtdruckverhältnisses $\pi$ aufgetragen. Des Weiteren sind die Kapazitätslinien $X_{00}$, $X_{02}$, $Xo5$, $X_{07}$, $X_{10}$ im Steuerfeld eingetragen, deren Verlauf und deren Verteilung insbesondere durch den Verlauf und die Verteilung der Kapazitätslinien $X_{00}$, $X_{02}$, $X_{05}$, $X_{07}$, $X_{10}$ in den Kennfeldern der Verdichter $V_1$, $V_2$, $V_3$, $V_4$ vorgegeben ist.

Zur Transformation der Kapazitätslinien $X_{00}$, $X_{02}$, $X_{05}$, $X_{07}$, $X_{10}$ vom Kennfeld in das Steuerfeld wird eine Vielzahl von Arbeitspunkten auf den Kapazitätslinien $X_{00}$, $X_{02}$, $X_{05}$, $X_{07}$, $X_{10}$ des Verdichters $V_1$ über die Kapazitätslinien $X_{00}$, $X_{02}$, $X_{05}$, $X_{07}$, $X_{10}$ aller nachfolgenden Verdichter ($V_2$, $V_3$ und $V_4$) bis zum Systemaustritt rechnerisch verfolgt. Diese Berechnung setzt immer voraus, dass der Zustand des Fluids am Eingang jedes weiteren Verdichters dem Austrittszustand aus dem vorangehenden Verdichter entspricht. Zu jedem Arbeitspunkt werden dabei das Gesamtdruckverhältnis $\pi$ und die zugehörigen reduzierten Drehzahlen $n_1$, $n_2$, $n_3$, $n_4$ bestimmt.

Anhand dieser Steuerfelder lassen sich für jedes gegebene Wertepaar aus Kapazitätsfaktor X und Gesamtdruckverhältnis $\pi$ die reduzierten (Soll-)Drehzahlen $n_1$, $n_2$, $n_3$, $n_4$ für den jeweiligen Verdichter ermitteln. Diese reduzierten (Soll-)Drehzahlen $n_1$, $n_2$, $n_3$, $n_4$ werden mit Hilfe gemessener Temperaturen in absolute Soll-Drehzahlen umgerechnet. Entlang der Kapazitätslinien $X_{00}$, $X_{02}$, $X_{05}$, $X_{07}$, $X_{10}$ ist die Regelungsfunktion F explizit aus dem Steuerfeld ablesbar.

Regelung der Serie in verschiedenen Zuständen:

Das erfindungsgemäße Verfahren eignet sich zur Regelung der Verdichter $V_1$, $V_2$, $V_3$, $V_4$ insbesondere im Gleichgewichtsbetrieb, bei dem nur geringe oder langsame Eintrittsdruck- und Austrittsdruckschwankungen zu erwarten sind. Aber auch zum sogenannten Pump-up (der Soll-Eintrittsdruck $p_{soll}$ ist höher als der Ist-Eintrittsdruck $p_{ist}$) oder Pump-down (der Soll-Eintrittsdruck $p_{soll}$ ist geringer als der Ist-Eintrittsdruck $p_{ist}$) aus Zuständen, die vergleichsweise weit vom Gleichgewicht entfernt sind, eignet sich dieses Verfahren, was ein Indikator für die Stabilität des Verfahrens ist.

Beispiel Gleichgewichtsbetrieb:

Im Gleichgewichtsbetrieb treten nur geringe Schwankungen des Ist-Eintrittsdrucks $p_{ist}$, der bei ca. 20mbar liegt, auf. Am Ausgang der Serie schwankt der Ausgangsdruck $p_4$ zwischen beispielsweise 450mbar und 500mbar.Die Schwankungen haben ihre Ursache beispielsweise im variablen Massenstrom und der anschließenden Reaktion von stromab liegenden volumetrischen Maschinen nach der Verdichterserie.

Das Ist-Gesamtdruckverhältnis $p_{ist}$ liegt demnach zwischen 450mbar/20mbar = 22,5 bzw. 500mbar/20mbar = 25.

Der natürliche Logarithmus des Ist-Gesamtdruckverhältnisses $\pi_{ist}$ liegt also in dem Wertebereich von 3,11-3,22.

Bei diesem Gesamtbetriebszustand liegt der Kapazitätsfaktor X bei ca. 0,5. Für das schwankende Ist-Gesamtdruckverhältnis $\pi_{ist}$ von 3,11-3,22 findet man für die vier Verdichter $V_1$, $V_2$, $V_3$, $V_4$ in den Figuren 5 bis 8 die entsprechenden

reduzierten Soll-Drehzahlen $n_1$, $n_2$, $n_3$, $n_4$.

Beispiel Pump-Down:

Der Ist-Eintrittsdruck $p_{ist}$ ist größer als der Soll-Eintrittsdruck $p_{soll}$ (z.B. Ist-Eintrittsdruck $p_{ist}$ = 100mbar, Soll-Eintrittsdruck $p_{soll}$ = 20mbar). Der Ist-Austrittsdruck $p_4$ schwankt zwischen 450mbar und 500mbar, d.h. der Logarithmus des Ist-Gesamtdruckverhältnisses $\pi_{ist}$ schwankt zwischen 1,5 und 1,6.

Aufgrund der hohen Abweichung des Ist-Eintrittsdrucks $p_{ist}$ vom Soll-Eintrittsdruck $p_{soll}$ wird der Kapazitätsfaktor X immer weiter erhöht (z.B. von 0,5 auf 1).

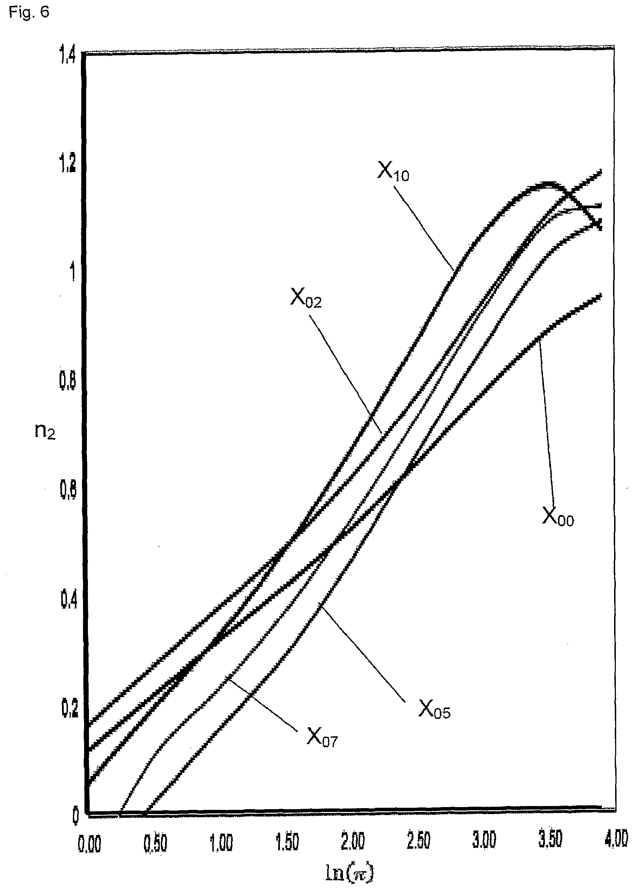

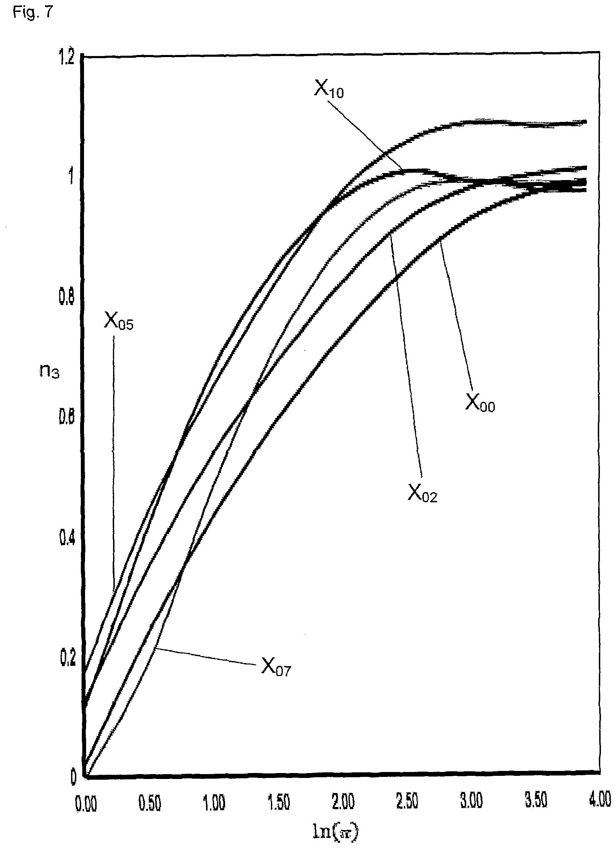

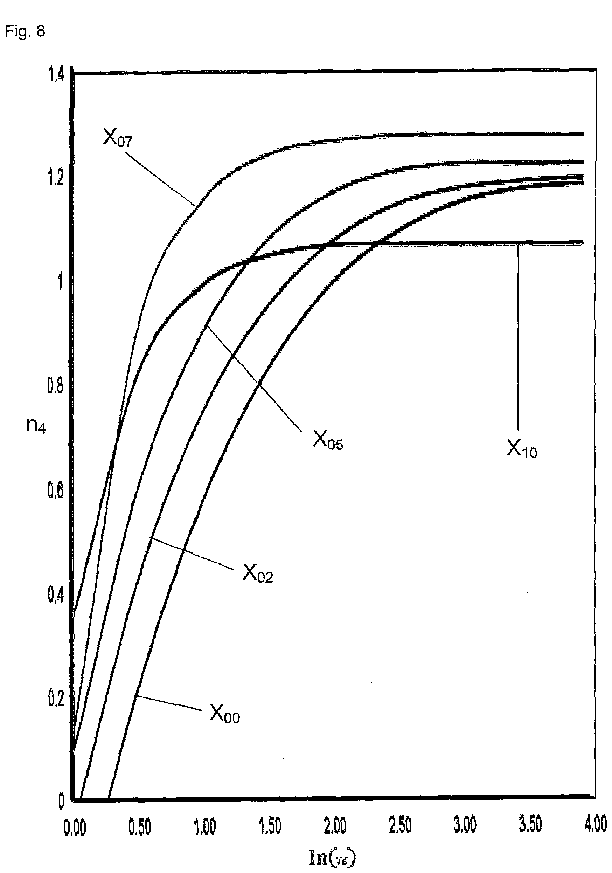

Bei einem logarithmischen Ist-Gesamtdruckverhältnis $\pi_{ist}$ von 1,5 bewirkt eine Erhöhung des Kapazitätsfaktors von 0,5 auf 1 folgendes:
Die reduzierte Soll-Drehzahl $n_1$ für den ersten Verdichter $V_1$ wird geringfügig erhöht (Figur 5). Die reduzierte Soll-Drehzahl $n_2$ für den zweiten Verdichter $V_2$ wird mehr erhöht als die des ersten Verdichters $V_1$ (Figur 6). Die reduzierte Soll-Drehzahl $n_3$ für den dritten Verdichter $V_3$ wird für Kapazitätsfaktoren X zwischen 0,5 und 0,75 reduziert und zwischen 0,75 und 1 wieder erhöht (Figur 7). Die reduzierte Soll-Drehzahl $n_4$ wird für Kapazitätsfaktoren X zwischen 0,5 und 0,75 erhöht und zwischen 0,75 und 1 wieder reduziert (Figur 8).

Durch diese Regelung gleicht sich der Ist-Eintrittsdruck $p_{ist}$ dem Soll-Eintrittsdruck $p_{soll}$ an, wobei der Kapazitätsfaktor X je nach Ist-Gesamtdruckverhältnis $\pi_{ist}$ angepasst wird, und schließlich bei Erreichen des Soll-Eintrittsdrucks $p_{soll}$ wieder auf ca. 0,5 absinkt.

In den Figuren 5 bis 8 kann diese Regelung wie folgt nachvollzogen werden: Durch die Erhöhung des Kapazitätsfaktors X bewegt man sich zunächst im Allgemeinen vertikal im Steuerfeld, d.h. die reduzierten Soll-Drehzahlen $n_1$, $n_2$, $n_3$, $n_4$ werden (im Allgemeinen) für jeden Verdichter $V_1$, $V_2$, $V_3$, $V_4$ erhöht. Dies bewirkt eine Änderung des Gesamtdruckverhältnisses $\pi_{ist}$, da ein erhöhter reduzierter Massenstrom $\dot{m}_1$, $\dot{m}_2$, $\dot{m}_3$, $\dot{m}_4$ als Folge der erhöhten reduzierten Drehzahlen $n_1$, $n_2$, $n_3$, $n_4$ entsteht. Dadurch wächst das Ist-Gesamtdruckverhältnis $\pi_{ist}$ an, da der Ist-Eintrittsdruck $p_{ist}$ sinkt. Ein steigendes Ist-Gesamtdruckverhältnis $\pi_{ist}$ bewirkt nun eine im Wesentlichen horizontale Bewegung im Steuerfeld, so dass der Kapazitätsfaktor X im Allgemeinen wieder heruntergeregelt wird. Wenn der Ist-Eintrittsdruck $p_{ist}$ nun dem Soll-Eintrittsdruck $p_{soll}$ entspricht, liegt der Kapazitätsfaktor X bei ca. 0,5. Bei diesem Wert des Kapazitätsfaktors X und Logarithmus des Design-Gesamtdruckverhältnis $\pi_{Design}$ (von beispielsweise 3,5) läuft die Serie der Verdichter mit dem höchsten Wirkungsgrad.

Beispiel Pump-up:

Der Ist-Eintrittsdruck $p_{ist}$ ist kleiner als der Soll-Eintrittsdruck $p_{soll}$ (z.B. Ist-Eintrittsdruck $p_{ist}$ = 20mbar, Soll-Eintrittsdruck $p_{soll}$ = 100mbar). Der Ist-Austrittsdruck $p_4$ schwankt zwischen 450mbar und 500mbar, d.h. der Logarithmus des Ist-Gesamtdruckverhältnisses $\pi_{ist}$ schwankt zwischen 3,11 und 3,22. Aufgrund der Abweichung des Ist- vom Soll-Eintrittsdruck wird der Kapazitätsfaktor X reduziert (z.B. von 0,5 auf 0).
Wenn der Kapazitätsfaktor X bei einem logarithmischen Ist-Gesamtdruckverhältnis $\pi_{ist}$ von 3,11 von 0,5 auf 0 sinkt, passiert folgendes:
Die reduzierte Soll-Drehzahl $n_1$ des ersten Verdichters $V_1$ wird erhöht (Figur 5). Die reduzierte Soll-Drehzahl $n_2$ für den zweiten Verdichter $V_2$ wird für Kapazitätsfaktoren X zwischen 0,5 und 0,25 zunächst erhöht und zwischen 0,25 und 0 wieder reduziert (Figur 6). Die reduzierte Soll-Drehzahl $n_3$ des dritten Verdichters $V_3$ wird reduziert (Figur 7). Die reduzierte Soll-Drehzahl $n_4$ des vierten Verdichters $V_4$ wird reduziert (Figur 8).

Auf diese Weise wird das Ist-Gesamtdruckverhältnis $\pi_{ist}$ reduziert und daher strebt der Ist-Eintrittsdruck $p_{ist}$ dem Soll-Eintrittsdruck $p_{soll}$ entgegen.

Diese Art der Regelung ist für Betriebszustände, bzw. Ist-Gesamtdruckverhältnisse $\pi_{ist}$, die in der Nähe des Design-Gesamtdruckverhältnisses $\pi_{Design}$ liegen, besonders vorteilhaft. Bei der Regelung von Zuständen, die stark von dem Design-Gesamtdruckverhältnis $\pi_{Design}$ abweichen, wird der Kapazitätsfaktor X in Sättigung gefahren (also 0 oder 1, bzw. 0,05 oder 0,9) und dennoch ändert sich das Ist-Gesamtdruckverhältnis $\pi_{ist}$ nicht notwendigerweise, da sich an diesen Zuständen beispielsweise zwei Kapazitätslinien $X_{00}$, $X_{02}$, $X_{05}$, $X_{07}$, $X_{10}$ überschneiden. Eine Erhöhung bzw. Reduzierung des Kapazitätsfaktors X bewirkt dort keine Änderung der reduzierten Soll-Drehzahl $n_1$, $n_2$, $n_3$, $n_4$. In diesem Fall regelt das erfindungsgemäße Verfahren wie folgt:

Beispiel Pump-Down:

Der Ist-Austrittsdruck $p_4$ liegt beispielsweise bei 450mbar und der Ist-Eintrittsdruck $p_{ist}$ bei 350mbar. Der Logarithmus des Ist-Gesamtdruckverhältnisses $\pi_{ist}$ liegt daher bei ca. 0,25. Der Soll-Eintrittsdruck $p_{soll}$ ist 20mbar. Der Kapazitätsfaktor X wird also aufgrund der Differenz aus Ist- und Soll-Eintrittsdruck erhöht.

In Figur 8, die das Steuerfeld des vierten Verdichters $V_4$ darstellt, sieht man, dass eine Erhöhung des Kapazitätsfaktors X von 0,75 auf 1 (bzw. auf 0,9, aufgrund der Beschränkung auf den Maximalwert $X_{max}$) nicht notwendigerweise eine Erhöhung der reduzierten Soll-Drehzahl $n_4$ nach sich zieht. Das Ist-Gesamtdruckverhältnis $\pi_{ist}$ würde sich dann nicht weiter ändern. In diesem Fall wird das Ist-Gesamtdruckverhältnis $\pi_{ist}$ durch ein Modell-Gesamtdruckverhältnis $\pi_{Model}$ ersetzt bzw. angepasst (siehe oben). Es könnte allerdings auch sein, dass bei zwei Verdichtern der Serie die Erhöhung zu höheren Soll-Drehzahlen führt und bei den anderen zwei Verdichtern zu einer Verringerung der Soll-Drehzahlen. Wenn die Gesamtreaktion der Kette, den Ist-Eintrittsdruck $p_{ist}$ reduzieren kann, kann das System immer noch mit dem Ist-Gesamtdruckverhältnis $\pi_{ist}$ weiter arbeiten, andernfalls wird wie beschrieben das Ist-Gesamtdruckverhältnis $\pi_{ist}$ durch das Modell-Gesamtdruckverhältnis $\pi_{Model}$ ersetzt. Das Modell-Gesamtdruckverhältnis $\pi_{Model}$ ist geringfügig größer als das Ist-Gesamtdruckverhältnis $\pi_{ist}$. Im Steuerfeld des vierten Verdichters $V_4$ bewegt man sich also horizontal entlang der Kapazitätslinie $X_{10}$ von 1 (bzw. 0,9). Dadurch bewegt man sich aus dem Überschneidungsbereich der Kapazitätslinien $X_{07}$ und $X_{10}$ heraus, so dass die Regelung auf Basis des Modell-Gesamtdruckverhältnisses $\pi_{Model}$ und des Kapazitätsfaktors X weiterhin effektiv arbeitet. Sobald der Kapazitätsfaktor X nicht mehr in Sättigung liegt, d.h. wenn der Proportional-Integral Wert PI nicht mehr über dem Maximalwert $X_{max}$ des Kapazitätsfaktors X liegt, ist Modell-Gesamtdruckverhältnis $\pi_{Model}$ gleich dem Ist-Gesamtdruckverhältnis $\pi_{ist}$.

Rational, wie die Kapazitätslinien $X_{00}$, $X_{02}$, $X_{05}$, $X_{07}$, $X_{10}$ im Kennfeld jedes Verdichters $V_1$, $V_2$, $V_3$, $V_4$ anzuordnen sind:

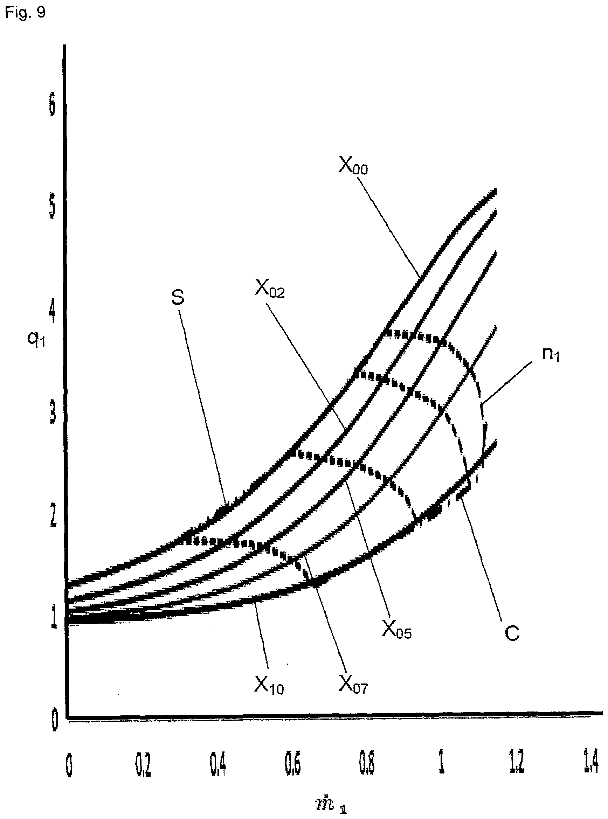

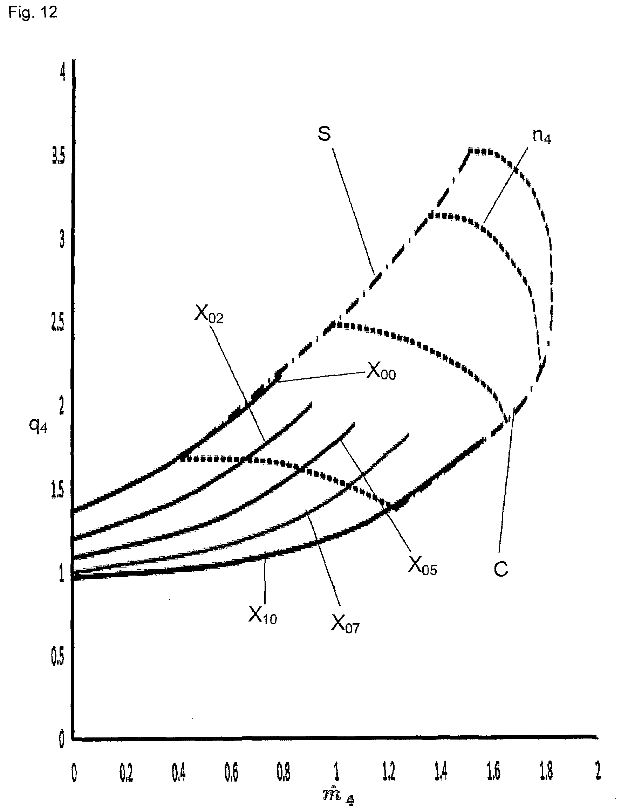

Figuren 9 bis 12 zeigen eine Gleichverteilung der Kapazitätslinien $X_{00}$, $X_{02}$, $X_{05}$, $X_{07}$, $X_{10}$ im Kennfeld für jeden Verdichter $V_1$, $V_2$, $V_3$, $V_4$. Diese Art der Verteilung birgt verschiedene Nachteile, aus deren Behebung dann beispielsweise die Verteilung wie in Figuren 1 bis 4 dargestellt folgt.

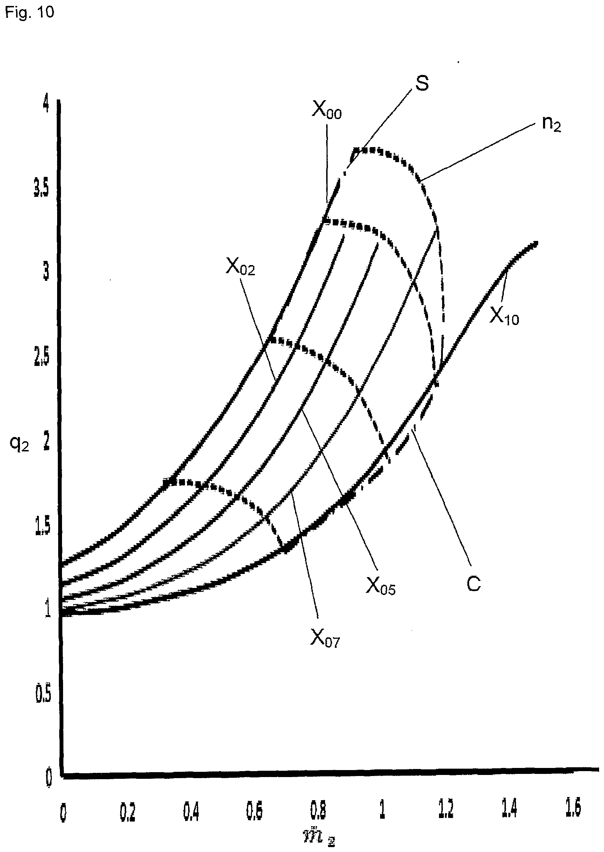

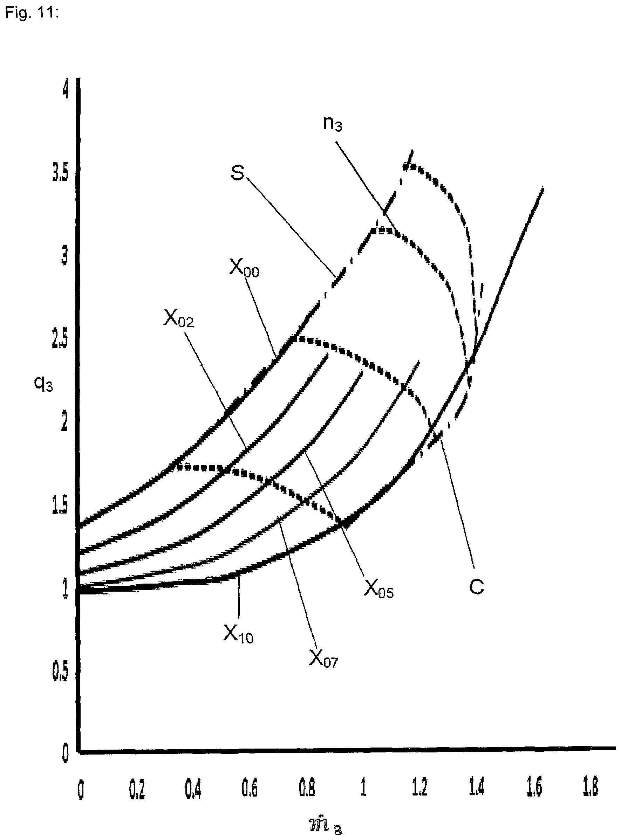

Entlang der Kapazitätslinie $X_{10}$ weisen der zweite und der dritte Verdichter $V_2$, $V_3$ (Figuren 10 und 11) sehr hohe reduzierte Massenströme $\dot{m}_2$, $\dot{m}_3$ oberhalb von sehr hohen reduzierten Drehzahlen $n_2$, $n_3$ des jeweiligen Verdichters auf. In diesem Bereich sinkt der Wirkungsgrad der beiden Verdichter $V_2$, $V_3$ deutlich und die Austrittstemperatur steigt, was insbesondere bei dem dritten Verdichter $V_3$ das Risiko einer zu hohen Drehzahl (Überdrehzahl) erhöht.

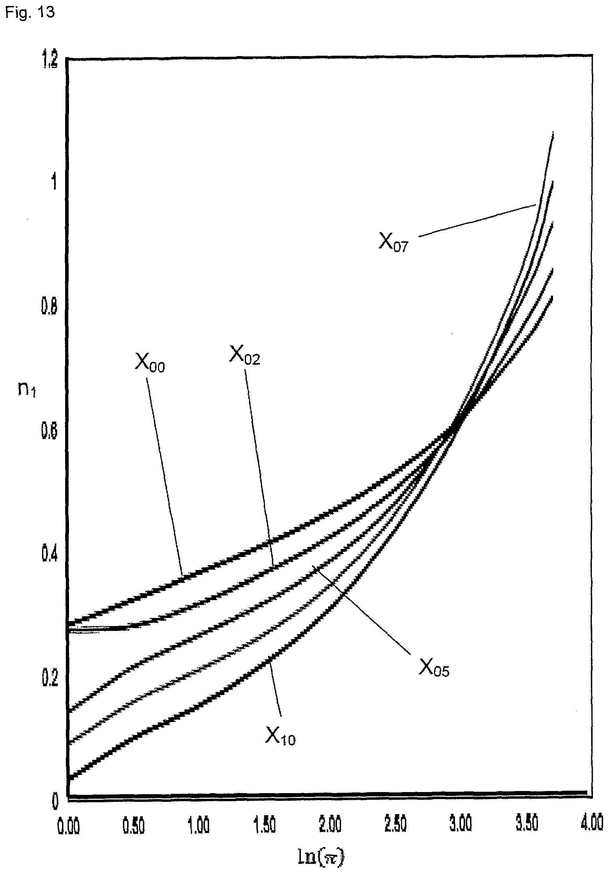

Außerdem soll durch eine Erhöhung des Kapazitätsfaktors X (also insbesondere, wenn der Ist-Eintrittsdruck $p_{ist}$ stark vom Soll-Eintrittsdruck $p_{soll}$ abweicht), erwartungsgemäß eine höhere reduzierte Soll-Drehzahl $n_2$, $n_3$ erreicht werden. In Figur 13 sieht man allerdings, dass bei einer Gleichverteilung der Kapazitätslinien $X_{00}$, $X_{02}$, $X_{05}$, $X_{07}$, $X_{10}$ im Kennfeld beispielsweise für den ersten Verdichter $V_1$ (Figur 9) die reduzierten Drehzahlen $n_1$ bis zu einem Druckverhältnis von ca. 3 für steigende Kapazitätsfaktoren X verringert werden, was eine unerwünschte Regelung wäre. Erreicht werden sollte ja eine Erhöhung der reduzierten Drehzahlen $n_1$, um den Ist-Eintrittsdruck $p_{ist}$ abzusenken.

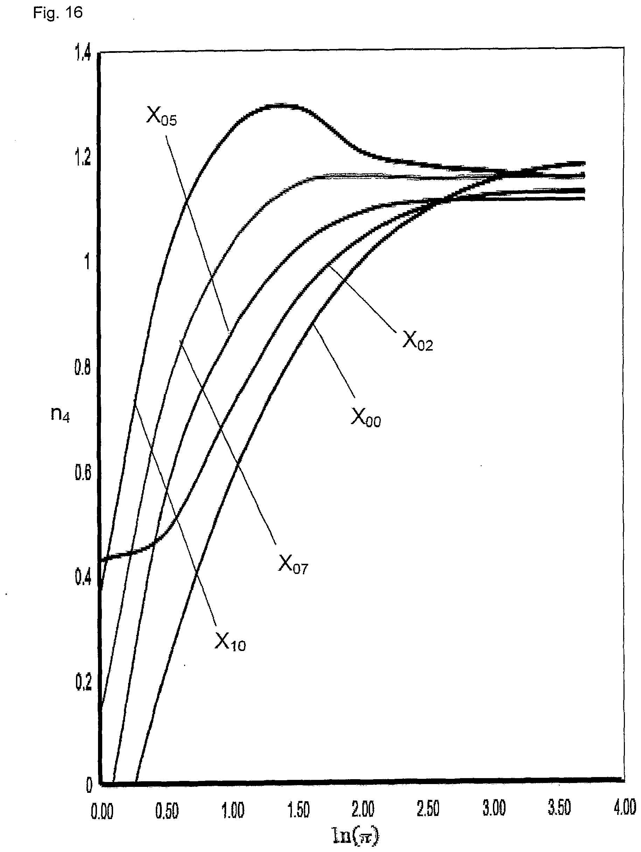

Des Weiteren weist der vierte Kompressor $V_4$ bei niedrigen Ist-Gesamtdruckverhältnissen $\pi_{ist}$ (Figur 16) temporär sehr hohe reduzierte Drehzahlen $n_4$ auf. Dies gilt insbesondere für die Kapazitätslinie $X_{10}$. Sehr hohe reduzierte Drehzahlen $n_4$ weisen auf hohe Drehzahlen und hohe Temperaturen hin, was einen unwirtschaftlichen Betriebszustand kennzeichnet.

Eine Nicht-Gleichverteilung der Kapazitätslinien $X_{00}$, $X_{02}$, $X_{05}$, $X_{07}$, $X_{10}$ im Kennfeld hingegen bewirkt die folgenden günstigeren Eigenschaften:
Figur 5 entnimmt man, dass die reduzierten Drehzahlen $n_1$ vom ersten Verdichter $V_1$ entlang der Kapazitätslinien $X_{02}$, $X_{05}$, $X_{07}$ und $X_{10}$ im für alle Ist-Gesamtdruckverhältnisse $\pi_{ist}$ steigen. Dadurch wird bei einem Pump-down der störungsfreie Betrieb des wichtigsten Verdichters mit dem höchsten Einzel-Druckverhältnis gewährleistet.

Aus den Figuren 1 bis 4 sieht man, dass kein Verdichter in den Sperr-Zustand gefahren wird (also an die Sperr-Kennlinie C) fährt, wodurch ein hoher Wirkungsgrad gewährleistet ist.

Aus den Figuren 5 bis 8 sieht man weiterhin, dass jeder Verdichter $V_1$, $V_2$, $V_3$, $V_4$ bei einem bestimmten Ist-Gesamtdruckverhältnis $\pi_{ist}$ (bzw. dessen Logarithmus) eine reduzierte Soll-Drehzahl $n_1$, $n_2$, $n_3$, $n_4$ von 1 erreicht und in diesem Bereich bleibt. (Bei niedrigen Druckverhältnissen $\pi_{ist}$ der vierte Verdichter $V_4$, bei mittleren der zweite und dritte $V_2$, $V_3$ und bei hohen Druckverhältnissen $\pi_{ist}$ wie sie am Designpunkt anzutreffen sind, der erste Verdichter $V_1$). Dieses Verhalten gewährleistet einen störungsfreien Pump-down und reduziert das Risiko von Überdrehzahlen.

Sowohl bei gleichverteilten Kapazitätslinien $X_{00}$, $X_{02}$, $X_{05}$, $X_{07}$, $X_{10}$ als auch bei nicht gleichverteilten Kapazitätslinien $X_{00}$, $X_{02}$, $X_{05}$, $X_{07}$, $X_{10}$ führen hohe Kapazitätsfaktoren X nicht immer zu höheren reduzierten Drehzahlen $n_1$, $n_2$, $n_3$, $n_4$. Jedoch ist im Fall von nicht-gleichverteilten Kapazitätslinien $X_{00}$, $X_{02}$, $X_{05}$, $X_{07}$, $X_{10}$ die Möglichkeit vorhanden, durch eine Erhöhung des Gesamtdruckverhältnisses $\pi$ auf ein Modell-Gesamtdruckverhältnis $\pi_{Model}$, eine stetige Erhöhung der reduzierten Soll-Drehzahlen $n_1$, $n_2$, $n_3$, $n_4$ zu erreichen.

Die Kriterien zur Verteilung der Kapazitätslinien $X_{00}$, $X_{02}$, $X_{05}$, $X_{07}$, $X_{10}$ im Kennfeld jedes Verdichters $V_1$, $V_2$, $V_3$, $V_4$ können aus den folgenden Prinzipien abgeleitet werden. Durch eine Festlegung/Verteilung der Kapazitätslinien $X_{00}$, $X_{02}$, $X_{05}$, $X_{07}$, $X_{10}$ ist auch die Regelungsfunktion F für die reduzierten Drehzahlen $n_1$, $n_2$, $n_3$, $n_4$ bestimmt:

1. Der kritischste Verdichter, zumeist der erste Verdichter $V_1$ in der Serie, muss möglichst stetig und kontinuierlich höhere reduzierte Drehzahlen $n_1$ für steigende Kapazitätsfaktoren X von X=0 auf X=1 aufweisen und für steigende Gesamtdruckverhältnisse $\pi$ steigende reduzierte Drehzahlen $n_1$ aufweisen.

2. Kein Verdichter soll auf der Sperr- oder Pump Kennlinie C, S betrieben werden.

3. Kein Verdichter darf auf eine Überdrehzahl geregelt werden, da ansonsten die Maschinensicherheit nicht gewährleistet ist.

4. Die Verdichter $V_1$, $V_2$, $V_3$, $V_4$ müssen nacheinander ihre Designpunkte (wirtschaftlichen Betriebszustände) erreichen und bei Erreichen des Designpunktes soll der reduzierte Soll-Drehzahlwert $n_1$, $n_2$, $n_3$, $n_4$ ungefähr um 1 bleiben (bei ca. 5% Toleranz). D.h. das Gesamtdruckverhältnis sollte bei niedrigen Gesamtdruckverhältnissen durch den vierten (letzte) Verdichter $V_4$ der Serie erzeugt werden, wobei bei steigendem Gesamtdruckverhältnis, wenn der vierte Verdichter bereits am Designpunkt läuft, der dritte Verdichter $V_3$ und bei weiterem Ansteigen des Gesamtdruckverhältnisses der zweite Verdichter $V_2$ zugeschaltet wird und schließlich der erste Verdichter $V_1$, so dass am Ende alle Verdichter auf Ihren jeweiligen Designpunkten betrieben werden.

5. An dem Designpunkt, an dem alle Verdichter $V_1$, $V_2$, $V_3$, $V_4$ ungefähr auf der reduzierten Drehzahl $n_1$, $n_2$, $n_3$, $n_4$ gleich 1 laufen, müssen die Verdichter mit dem höchsten Einzel- Druckverhältnis $q_1$, $q_2$, $q_3$, $q_4$ (wenn möglich) für steigende Kapazitätsfaktoren X steigende reduzierte Soll-Drehzahlen $n_1$, $n_2$, $n_3$, $n_4$ aufweisen, damit die Regelung um den Designpunkt schnell erfolgen kann. An dem Designpunkt weist für gewöhnlich der erste Verdichter $V_1$ das höchste Einzel-Druckverhältnis $q_1$ auf. Weiterhin müssen die Kapazitätslinien $X_{00}$, $X_{02}$, $X_{05}$, $X_{07}$, $X_{10}$ insbesondere folgende

Bedingungen im Kennfeld erfüllen:

- Sie müssen zwischen einer Pump- S und einer Sperrlinie C liegen.
- Jede Kapazitätslinie $X_{00}$, $X_{02}$, $X_{05}$, $X_{07}$, $X_{10}$ ordnet jeweils einem reduzierten Massenstrom $\dot{m}_1$, $\dot{m}_2$, $\dot{m}_3$, $\dot{m}_4$ genau ein Einzel-Druckverhältnis $q_1$, $q_2$, $q_3$, $q_4$ zu.
- Jede Kapazitätslinie $X_{00}$, $X_{02}$, $X_{05}$, $X_{07}$, $X_{10}$ erstreckt sich entlang des gesamten Wertebereichs des reduzierten Massenstromes $\dot{m}_1$, $\dot{m}_2$, $\dot{m}_3$, $\dot{m}_4$

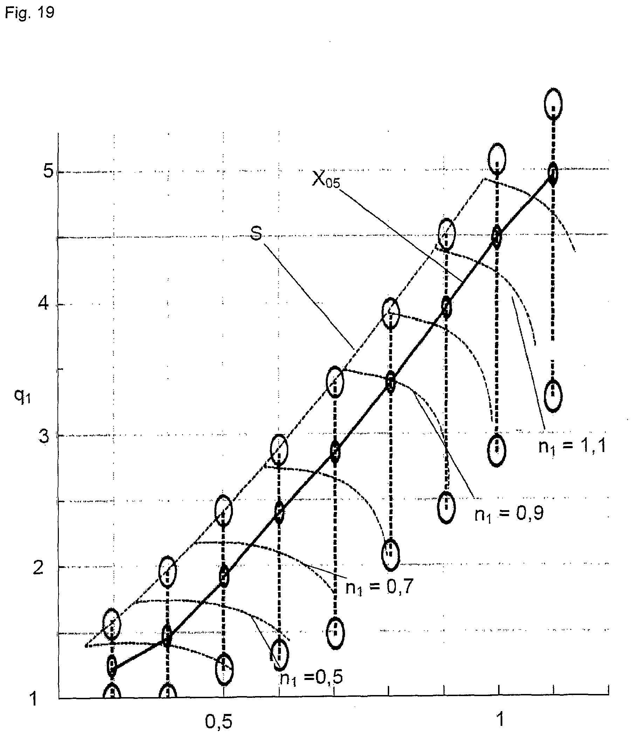

Figur 19 zeigt beispielhaft anhand eines Kennfeldes für den ersten Verdichter $V_1$, dass für einen bestimmten reduzierten Massenstrom $\dot{m}_1$ mehrere Einzeldruckverhältnisse $q_1$ in Frage kommen. Eine Kapazitätslinie, beispielsweise die Kapazitätslinie $X_{05}$ legt nun fest wie der Verdichter für ein bestimmten Kapazitätsfaktor innerhalb der Serie zu steuern ist, damit die Serie möglichst wirtschaftlich arbeitet. Es ist zu sehen, dass die Kapazitätslinie $X_{05}$ nicht exakt in der Mitte der maximalen und minimalen Einzeldruckverhältnisse (durch Kreise in Fig. 19 gekennzeichnet) verläuft, die für einen gegebenen reduzierten Massenstrom $\dot{m}_1$ möglich sind.

Beispiel zur Berechnung der Eintritts- und Austrittszustände über einem Verdichter und zur Bestimmung des Regelungsverhaltens und der Anordnung der Kapazitätslinien der Verdichterserie:

Für eine gegebene Eintrittstemperatur (4,05K) und einen gegebenen Eintrittsdruck (24mbar) am ersten Verdichter $V_1$ und einem gegebenen Kapazitätsfaktor X = 0, der auf der Kapazitätslinie $X_{00}$ liegt, wird das Einzeldruckverhältnis $q_1$ für alle reduzierten Massenströme und für alle (reduzierten) Drehzahlen berechnet:
Für einen reduzierten Massenstrom $\dot{m}_1$ von 0,3 ergibt sich danach aus Figur 19 eine reduzierte Drehzahl $n_1$ von 0,53. Die (absolute) Drehzahl ergibt sich nach der Formel zur Umrechnung von reduzierten in absolute Drehzahlen zu 600 Hz:

$$n_{abs} = n_{red} \cdot n_{Design} \cdot \sqrt{\frac{T_{ist}}{T_{Design}}}$$

Wobei $n_{abs}$ die absolute Drehzahl ist, $n_{red}$ die reduzierte Drehzahl (hier $n_1$) und $n_{Design}$ die Drehzahl darstellt, für die der Verdichter ausgelegt wurde. $T_{ist}$ ist die Ist-Temperatur des Fluids, und $T_{Design}$ ist die Auslegungstemperatur oder auch Design-Temperatur des Verdichters. Aus dem reduzierten Massenstrom $\dot{m}_1$ wird der (absolute) Massenstrom aus der folgenden Formel zu 16 g/s berechnet:

$$\dot{m}_{red} = \frac{\dot{m}_{ist}}{\dot{m}_{Design}} \cdot \frac{p_{Design}}{p_{ist}} \cdot \sqrt{\frac{T_{ist}}{T_{Design}}}$$

wobei $\dot{m}_{red}$ der reduzierte Massenstrom durch den Verdichter ist, $\dot{m}_{ist}$ der momentane Massenstrom, $\dot{m}_{Design}$ den Massenstrom bezeichnet, für den der jeweiligen Verdichter ausgelegt ist, $p_{Design}$ den Designdruck am jeweiligen Verdichter darstellt, $T_{Design}$ die Design-Temperatur ist und $p_{ist}$ der Ist-Eintrittsdruck am jeweiligen Verdichter ist.

Der Durchmesser des Verdichterrades des Verdichters $V_1$ sei nun beispielsweise 100mm. Aus dem Durchmesser und der absoluten Drehzahl wird nun eine Umfangsgeschwindigkeit zu $\pi$*100mm*60Hz=188,49m/s berechnet.

Im Folgenden wird nun eine Strömungsgeschwindigkeit insbesondere die tangentiale Strömungsgeschwindigkeit im Verdichter $V_1$ berechnet. Dadurch dass die Austrittsfläche des Verdichterrades bekannt ist, kann über die Dichte des Fluids am Ausgang des Verdichters $V_1$ die Strömungsgeschwindigkeit berechnet werden. Die Dichte ist jedoch eine Funktion der Austrittsbedingungen (insbesondere des Drucks und der Temperatur). Daher berechnet man diesen Schritt iterativ, wie im Folgenden erläutert wird. Und zwar unter der Annahme, dass die Dichte beispielsweise bei $0,27 kg/m^3$ liegt. D.h. Aus den 16g/s, der Dichte von $0,27 kg/m^3$ und der Austrittsfläche des Verdichters wird eine Strömungsgeschwindigkeit des Fluids berechnet. Durch Annahme eines Strömungswinkels (beispielsweise anhand der Geometrie des Verdichterrades)wird aus der Strömungsgeschwindigkeit des Fluids die tangentiale Strömungsgeschwindigkeit berechnet.

Mit Hilfe der Turbomaschinengleichung (Euler Gleichung) wird die Enthalpieerhöhung aus dem Produkt der tangentialen Strömungsgeschwindigkeit und der Umfangsgeschwindigkeit des Verdichterrades berechnet.

Die Enthalpieerhöhung am Verdichter $V_1$ wird anhand der bekannten Wärmekapazität des Fluids in eine Temperaturerhöhung umgerechnet. Weiterhin wird der Wirkungsgrad des Verdichters $V_1$ am jeweiligen Betriebszustand (reduzierte Drehzahl $n_1$, reduzierter Massenstrom $\dot{m}_1$) im Kennfeld ermittelt. Die Druckerhöhung ergibt sich aus der Temperaturerhöhung und dem Wirkungsgrad des Verdichters an dem jeweiligen Betriebszustand.

Somit sind die Austrittstemperatur $T_1$ und der Austrittsdruck $p_1$ des ersten Verdichters $V_1$ der Serie ermittelt. Aus diesen beiden Größen wird nun die Dichte des Fluids berechnet und mit dem ursprünglich angenommenen Wert der Dichte verglichen. Sollten die Dichtewerte von einander abweichen, werden die vorigen Schritte zur Berechnung der Dichte (also insbesondere durch Variation der angenommenen Dichte) so oft wiederholt, bis die berechnete Dichte mit der angenommenen Dichte übereinstimmt. Wie oben bereits erwähnt bilden der Austrittsdruck $p_1$ und die Austrittstemperatur $T_1$ den Eintrittszustand des nachfolgenden Verdichters $V_2$.

Seien nun $T_1$ =9K und $p_1$ = 100mbar. Der (absolute) Massenstrom ist für alle Verdichter gleich, also 16g/s. Aus diesen Größen (und dem Kapazitätsfaktor X) werden nun die Austrittstemperatur $T_2$ und der Austrittsdruck $p_2$ des zweiten Verdichters V2 der Serie analog zu oben berechnet. Anhand dieses Modells kann für alle Kapazitätsfaktoren X und Verteilungen von Kapazitätslinien $X_{00}$, $X_{02}$, $X_{05}$, $X_{07}$, $X_{10}$ in den Kennfeldern das Verhalten der Verdichterserie $V_1$, $V_2$, $V_3$, $V_4$ vorberechnet werden. Der Verlauf und die Anordnung der Kapazitätslinien $X_{00}$, $X_{02}$, $X_{05}$, $X_{07}$, $X_{10}$ im jeweiligen Kennfeld des jeweiligen Verdichters $V_1$, $V_2$, $V_3$, $V_4$ kann somit, anhand dieses Berechnungsmodels der Verdichterserie optimiert werden.

Alternativ zur Verwendung von Euler-Gleichungen kann man auch Tabellen generieren, indem man aus jedem Kennfeld eine Tabelle generiert, und aus dieser Tabelle die Druckverhältnisse als Funktion des reduzierten Massenstroms und der reduzierten Drehzahl ausliest.

Beispiele zur Berechnung des Proportional-Integral-Wertes PI:

Bei dem erfindungsgemäßen Verfahren ermittelt insbesondere ein PI-Regler (proportional, integrierender Regler) einen Proportionalwert prop aus der der Differenz des Soll-Eintrittsdrucks $p_{soll}$ und des Ist-Eintrittsdrucks $p_{ist}$ am ersten Verdichter $V_1$ der Serie. Im transienten Betrieb, also beispielsweise beim Hochfahren der Anlage (Pump-Down) ist der Soll-Eintrittsdruck $p_{soll}$ geringer als der Ist-Eintrittsdruck $p_{ist}$. Der Proportionalwert prop ist nun die Differenz aus Soll- und Ist-Eintrittsdruck multipliziert mit einem Verstärkungsfaktor k:

$$prop = -k(p_{soll} - p_{ist}).$$

Der PI-Regler berechnet aus diesem Proportionalwert prop zudem einen Integralwert $int_{t=n+1}$. Dabei wird der Proportionalwert prop mit einer Zykluszeit $\Delta t$ multipliziert, einer Integralzeit T dividiert und zu dem Integralwert des vorangegangenen Zyklus $int_{t=n}$ addiert:

$$int_{t=n+1} = int_{t=n} + prop \cdot \frac{\Delta t}{T}$$

Theoretisch kann der Kapazitätsfaktor X Werte zwischen 0 ($X_{pump}$=0 Pump-Regime) und 1 ($X_{sperr}$=1, Sperr-Regime) annehmen. Damit die Verdichter nicht in diese Regimes gefahren werden, beschränkt man den Kapazitätsfaktor X auf Werte zwischen dem Minimalwert $X_{min}=X_{pump}+0,05$ und dem Maximalwert $X_{max}=X_{sperr}-0,1$.

Ebenso wird für den Integralwert $int_{t=n+1}$ ein oberer und unterer Grenzwert $int_{max}$ bzw. $int_{min}$ des Integralwertes int durch $X_{max}$ bzw. $X_{min}$ und vom natürlichen Logarithmus des Gesamtdruckverhältnisses $ln(\pi_{ist})$ abgeleitet:

$$int_{max} = X_{max} + ln(\pi_{ist}),$$

$$int_{min} = X_{min} + ln(\pi_{ist}).$$

Da das gemessene Ist-Gesamtdruckverhältnis $\pi_{ist}$ im transienten Betrieb (Pump-down) immer größer wird (der Ist-Eintrittsdruck $p_{ist}$ wird immer kleiner), werden dadurch die Grenzwerte des Integralwertes auch immer größer. Im umgekehrten Fall (Pump-up), also wenn der Soll-Eintrittsdruck $p_{soll}$ kleiner als der Ist-Eintrittsdruck $p_{ist}$ ist, werden diese Grenzwerte immer kleiner.

Wenn der Integralwert $int_{t=n+1}$ größer bzw. kleiner als der obere bzw. untere Grenzwert $int_{max}$, $int_{min}$ wird, wird er auf den jeweiligen Grenzwert begrenzt.

Proportionalwert prop und Integralwert $int_{t=n+1}$ werden addiert, um den Proportional-Integral-Wert PI zu generieren.

$$PI = prop + int_{t=n+1}$$

Wenn alle Verdichter $V_1$, $V_2$, $V_3$, $V_4$ in Serie an ihrem Designpunkt laufen, erreicht das Verdichtersystem seinen Design- oder Arbeitspunkt bei einem Design-Gesamtdruckverhältnis $\pi_{Design}$.

Wenn der Proportional-Integral-Wert PI kleiner ist als die Summe aus dem Maximalwert des Kapazitätsfaktors $X_{max}$ und aus dem natürlichen Logarithmus des Design-Gesamtdruckverhältnisses $\pi_{Design}$, dann wird der Kapazitätsfaktor X aus der Differenz des Proportional-Integral-Wertes PI und dem natürlichen Logarithmus des Ist-Gesamtdruckverhältnisses $\pi_{ist}$ berechnet. Andernfalls wird der Proportional-Integral-Wert PI auf die Summe aus dem natürlichen Logarithmus des Design-Gesamtdruckverhältnisses $\pi_{Design}$ und dem Maximalwert des Kapazitätsfaktors $X_{max}$ insbesondere zur Berechnung des Kapazitätsfaktors X beschränkt, d.h:

$$X = PI - ln(\pi_{ist}), \qquad\qquad wenn\ PI < ln(\pi_{Design}) + X_{sperr}$$

$$X = ln(\pi_{Design}) + X_{sperr} - ln(\pi_{ist})$$

sonst.

Anhand des so berechneten Kapazitätsfaktors X, wird nun entschieden, wie das Modell-Gesamtdruckverhältnis $\pi_{Model}$ ermittelt wird. Wie oben beschrieben, ist das Modell-Gesamtdruckverhältnis $\pi_{Model}$ gleich dem Ist-Gesamtdruckverhältnis $\pi_{ist}$, wenn der so ermittelte Kapazitätsfaktor X, zwischen dem Minimal- und Maximalwert $X_{min}$, $X_{max}$ liegt. Wenn der Kapazitätsfaktor X außerhalb dieses Wertebereichs liegt, dann wird das Modell-Gesamtdruckverhältnis $\pi_{Model}$ wie oben beschrieben über eine Sättigungsfunktion abgeändert. Anschließend wird der Kapazitätsfaktor X auf seinen Minimal, bzw. Maximalwert $X_{min}$, $X_{max}$ beschränkt und dann, insbesondere zusammen mit dem Modell-Gesamtdruckverhältnis $\pi_{Model}$, an die Regelungsfunktion F weitergeleitet, die aus diesen Argumenten die reduzierte Soll-Drehzahl $n_1$, $n_2$, $n_3$, $n_4$ für den jeweiligen Verdichter $V_1$, $V_2$, $V_3$, $V_4$ ermittelt.

Die reduzierten Soll-Drehzahlen $n_1$, $n_2$, $n_3$, $n_4$ für jeden Verdichter $V_1$, $V_2$, $V_3$, $V_4$ können insbesondere in einer Tabelle (look-up Tabelle) hinterlegt sein. Diese Tabelle kann insbesondere durch Modellberechnungen erstellt werden. Entsprechend des Kapazitätsfaktors X und des Modell-Gesamtdruckverhältnisses $\pi_{Model}$ kann insbesondere eine Software zum Auslesen der reduzierten Soll-Drehzahlen $n_1$, $n_2$, $n_3$, $n_4$ aus der Tabelle herangezogen werden.

Anstelle eines PI Reglers kann auch ein PID (proportional-integrierenderdifferenzierender) Regler eingesetzt werden. Dies ist insbesondere dann vorteilhaft, wenn die zu regelnden Massenstromvolumina kleiner sind als die Volumina bei Kühlanlagen der oben beschriebenen Art, da schnelle Schwankungen bei diesen verhältnismäßig großen Volumina eher selten sind. Wenn kleine Volumina reguliert werden sollen, ist es von Vorteil auch eine schnell reagierende Regelungskomponente zu haben, wie beispielsweise einen PID Regler, der aufgrund seiner differenzierenden Komponente schneller reagiert als ein PI-Regler.

Bezugszeichenliste

| $V_1$, $V_2$, $V_3$, $V_4$ | Erster, zweiter, dritter bzw. vierter Verdichter |
|---|---|
| $n_1$, $n_2$, $n_3$, $n_4$ | Erste, zweite, dritte bzw. vierte reduzierte (Soll-) Drehzahl |

(fortgesetzt)

| | |
|---|---|
| $n_{abs}$ | Absolute Drehzahl |
| $n_{Design}$ | Design-Drehzahl |
| $p_{ist}$ | Ist-Eintrittsdruck am ersten Verdichter |
| $p_{soll}$ | Soll-Eintrittsdruck am ersten Verdichter |
| $p_1, p_2, p_3, p_4$ | Austrittsdruck nach dem ersten, zweiten, dritten bzw. vierten Verdichter |
| $T_{ist}$ | Ist-Temperatur am Eingang des ersten Verdichters |
| $T_{Design}$ | Design-Temperatur |
| $T_1, T_2, T_3, T_4$ | Temperatur am Ausgang des ersten, zweiten dritten bzw. vierten Verdichters |
| $\dot{m}_1, \dot{m}_2, \dot{m}_3, \dot{m}_4$ | Reduzierter Massenstrom durch den ersten, zweiten, dritten bzw. vierten Verdichter |
| X | Kapazitätsfaktor |
| $X_{max}$ | Maximalwert des Kapazitätsfaktors |
| $X_{min}$ | Minimalwert des Kapazitätsfaktors |
| $X_{sperr}$ | Sperr-Kapazitätsfaktor |
| $X_{pump}$ | Pump-Kapazitätsfaktor |
| $X_{00}, X_{02}, X_{05}, X_{10}$ | Kapazitätslinien |
| prop | Proportionalwert |
| int | Integralwert |
| PI | Proportional-I ntegral-Wert |
| $\pi$ | Gesamtdruckverhältnis |
| $\pi_{Model}$ | Modell-Gesamtdruckverhältnis |
| $\pi_{ist}$ | Ist-Gesamtdruckverhältnis |
| $\pi_{Design}$ | Design-Gesamtdruckverhältnis |
| F | Regelungsfunktion |
| S | Pumpkennlinie |
| C | Sperrkennlinie |

**Patentansprüche**

1. Verfahren zur Regelung von Drehzahlen von in Serie angeordneten Verdichtern ($V_1$, $V_2$, $V_3$, $V_4$), die zur Verdichtung eines Fluids, insbesondere Helium, ausgebildet sind, umfassend die Schritte:

- Vorgeben eines Soll-Eintrittsdrucks ($p_{soll}$), den das Fluid an einem Eingang des am weitesten stromauf angeordneten Verdichters ($V_1$) aufweisen soll,
- Erfassen eines Ist-Eintrittsdrucks ($p_{ist}$) des Fluids an dem Eingang des am weitesten stromauf angeordneten Verdichters ($V_1$),
- Erfassen eines Ist-Austrittsdrucks ($p_4$) des Fluids an einem Ausgang des am weitesten stromab angeordneten Verdichters ($V_4$),
- Ermittlung eines Ist-Gesamtdruckverhältnisses ($\pi_{ist}$), wobei das Ist-Gesamtdruckverhältnis ($\pi_{ist}$) dem Quotienten aus dem Ist-Austrittsdruck ($p_4$) von dem am weitesten stromab angeordneten Verdichters ($V_4$), und dem Ist-Eintrittsdruck ($p_{ist}$) von dem am weitesten stromauf angeordneten Verdichters ($V_1$) entspricht,
- Bestimmung eines Proportional-Integral-Wertes (PI) aus der Abweichung des Ist-Eintrittsdrucks ($p_{ist}$) von dem Soll-Eintrittsdruck ($p_{soll}$),
- Bestimmung eines Kapazitätsfaktors (X) aus dem Proportional-Integral-Wert (PI) und dem Ist-Gesamtdruckverhältnis ($\pi_{ist}$),

- Ermittlung eines Modell-Gesamtdruckverhältnisses ($\pi_{Model}$) aus dem Ist-Gesamtdruckverhältnis ($\pi_{ist}$) und dem Kapazitätsfaktor (X),

- Bestimmung einer reduzierten Soll-Drehzahl ($n_1$, $n_2$, $n_3$, $n_4$) für jeden Verdichter ($V_1$, $V_2$, $V_3$, $V_4$), wobei die jeweilige reduzierte Soll-Drehzahl ($n_1$, $n_2$, $n_3$, $n_4$) als Funktionswert einer dem jeweiligen Verdichter ($V_1$, $V_2$, $V_3$, $V_4$) zugeordneten Regelungsfunktion (F) bestimmt wird, die jedem Wertepaar aus Kapazitätsfaktor (X) und Modell-Gesamtdruckverhältnis ($\pi_{Model}$), eine reduzierte Soll-Drehzahl ($n_1$, $n_2$, $n_3$, $n_4$) zuordnet,

- Umrechnen der reduzierten Soll-Drehzahlen ($n_1$, $n_2$, $n_3$, $n_4$) in Soll-Drehzahlen und Einstellen der Drehzahl jedes Verdichters ($V_1$, $V_2$, $V_3$, $V_4$) auf die jeweils zugeordnete Soll-Drehzahl.

2. Verfahren nach Anspruch 1, **dadurch gekennzeichnet, dass** der Proportional-Integral-Wert (PI) kleiner oder gleich der Summe aus dem insbesondere natürlichen Logarithmus eines Design-Gesamtdruckverhältnisses ($\pi_{Design}$) und einem Sperr-Kapazitätsfaktor ($X_{sperr}$) ist, wobei der Sperr-Kapazitätsfaktor ($X_{sperr}$) insbesondere eins beträgt und wobei das Design-Gesamtdruckverhältnis ($\pi_{Design}$) das Gesamtdruckverhältnis ($\pi$) ist, das sich ergibt, wenn alle Verdichter ($V_1$, $V_2$, $V_3$, $V_4$) der Serie an ihrem Designpunkt betrieben werden, wobei der Designpunkt eines Verdichters ($V_1$, $V_2$, $V_3$, $V_4$) insbesondere den Betriebszustand definiert, bei dem der jeweilige Verdichter ($V_1$, $V_2$, $V_3$, $V_4$) seinen höchsten Wirkungsgrad aufweist.

3. Verfahren nach Anspruch 1 oder 2, **dadurch gekennzeichnet, dass** der Kapazitätsfaktor (X) der Differenz aus dem Proportional-Integral-Wert (PI) und dem natürlichen Logarithmus des Ist-Gesamtdruckverhältnis ($\pi_{ist}$) entspricht.

4. Verfahren nach einem der vorhergehenden Ansprüche, **dadurch gekennzeichnet, dass** ein Maximal- und Minimalwert ($X_{max}$, $X_{min}$) für den Kapazitätsfaktor (X) definiert ist, wobei insbesondere der Maximalwert ($X_{max}$) zwischen 0,8 und 1 liegt und / oder wobei der Minimalwert ($X_{min}$) zwischen 0 und 0,1 liegt.

5. Verfahren nach Anspruch 4, **dadurch gekennzeichnet, dass** das Modell-Gesamtdruckverhältnis ($\pi_{Model}$) dem Ist-Gesamtdruckverhältnis ($\pi_{ist}$) multipliziert mit einer vom Kapazitätsfaktor (X) abhängigen Sättigungsfunktion entspricht, wobei die Sättigungsfunktion insbesondere 1 ist, wenn der Kapazitätsfaktor (X) zwischen dem Minimal- und Maximalwert ($X_{min}$, $X_{max}$) liegt, und wobei die Sättigungsfunktion insbesondere einer Exponential-Funktion der Differenz des Kapazitätsfaktors (X) und dem Minimalwert ($X_{min}$) entspricht, wenn der Kapazitätsfaktor (X) kleiner als der Minimalwert ($X_{min}$) ist, und wobei die Sättigungsfunktion insbesondere einer Exponential-Funktion der Differenz des Kapazitätsfaktors (X) und dem Maximalwert ($X_{max}$) entspricht, wenn der Kapazitätsfaktor (X) größer als der Maximalwert ($X_{max}$) ist.

6. Verfahren nach Anspruch 5, **dadurch gekennzeichnet, dass**, wenn der Kapazitätsfaktor (X) größer als der Maximalwert ($X_{max}$) ist, der Kapazitätsfaktor (X) dem Maximalwert ($X_{max}$) gleichgesetzt wird, insbesondere nachdem das Modell-Gesamtdruckverhältnis ($\pi_{Model}$) bestimmt wurde, und dass, wenn der Kapazitätsfaktor (X) kleiner als der Minimalwert ($X_{min}$) ist, der Kapazitätsfaktor (X) dem Minimalwert ($X_{min}$) gleichgesetzt wird, insbesondere nachdem das Modell-Gesamtdruckverhältnis ($\pi_{Model}$) bestimmt wurde.

7. Verfahren nach einem der vorhergehenden Ansprüche, **dadurch gekennzeichnet, dass** die Austrittstemperatur ($T_1$, $T_2$, $T_3$) des Fluids am Ausgang des jeweiligen Verdichters ($V_1$, $V_2$, $V_3$) der Eintrittstemperatur ($T_1$, $T_2$, $T_3$) des Fluids am Eingang des jeweils stromab des jeweiligen Verdichters ($V_1$, $V_2$, $V_3$) angeordneten Verdichters ($V_2$, $V_3$, $V_4$) der Serie gleich ist, und dass der Austrittsdruck ($p_1$, $p_2$, $p_3$) des Fluids am Ausgang des jeweiligen Verdichters ($V_1$, $V_2$, $V_3$) dem Eintrittsdruck ($p_1$, $p_2$, $p_3$) des Fluids am Eingang des jeweils stromab des jeweiligen Verdichters ($V_1$, $V_2$, $V_3$) angeordneten Verdichters ($V_2$, $V_3$, $V_4$) der Serie gleich ist.

8. Verfahren nach Anspruch 7, **dadurch gekennzeichnet, dass** die Austrittstemperatur ($T_1$, $T_2$, $T_3$, $T_4$) und der Austrittsdruck ($p_1$, $p_2$, $p_3$, $p_4$) für jeden Verdichter ($V_1$, $V_2$, $V_3$, $V_4$) aus dem Eintrittsdruck ($p_0$) und der Eintrittstemperatur ($T_0$) des am weitesten stromauf angeordneten Verdichters ($V_1$) der Serie insbesondere mit Hilfe einer Euler-Gleichung, insbesondere einer Turbomaschinengleichung, ermittelt wird, wobei insbesondere die reduzierte Drehzahl ($n_1$, $n_2$, $n_3$, $n_4$) für jeden Verdichter ($V_1$, $V_2$, $V_3$, $V_4$) und der reduzierte Massenstrom ($\dot{m}_1$, $\dot{m}_2$, $\dot{m}_3$, $\dot{m}_4$) durch den jeweiligen Verdichter ($V_1$, $V_2$, $V_3$, $V_4$) als Funktion des Gesamtdruckverhältnisses ($\pi$) und insbesondere des Kapazitätsfaktors (X) der Serie ermittelt wird.

9. Verfahren nach Anspruch 8, **dadurch gekennzeichnet, dass** mehrere, insbesondere fünf, Kapazitätslinien ($X_{00}$, $X_{02}$, $X_{05}$, $X_{07}$, $X_{10}$) für jeden Verdichter ($V_1$, $V_2$, $V_3$, $V_4$) festgelegt werden, wobei jede Kapazitätslinie ($X_{00}$, $X_{02}$, $X_{05}$, $X_{07}$, $X_{10}$) für jeden Verdichter ($V_1$, $V_2$, $V_3$, $V_4$) eine Funktion des Gesamtdruckverhältnisses ($\pi$) und insbesondere

eine Funktion des reduzierten Massenstromes ($\dot{m}_1$, $\dot{m}_2$, $\dot{m}_3$, $\dot{m}_4$) sowie der reduzierten Drehzahl ($n_1$, $n_2$, $n_3$, $n_4$) des jeweiligen Verdichters ($V_1$, $V_2$, $V_3$, $V_4$) ist, und wobei der Kapazitätsfaktor (X) entlang der jeweiligen Kapazitätslinie ($X_{00}$, $X_{02}$, $X_{05}$, $X_{07}$, $X_{10}$) für jeden Verdichter ($V_1$, $V_2$, $V_3$, $V_4$) konstant ist.

10. Verfahren nach Anspruch 9, **dadurch gekennzeichnet, dass** die Regelungsfunktion (F) die reduzierte Soll-Drehzahl ($n_1$, $n_2$, $n_3$, $n_4$) aus einer vorberechneten Tabelle ermittelt, wobei die Tabelle für jeden Kapazitätsfaktor (X), der auf einer Kapazitätslinie ($X_{00}$, $X_{02}$, $X_{05}$, $X_{07}$, $X_{10}$) liegt und für jedes Gesamtdruckverhältnis ($\pi$), die jeweilige reduzierte Drehzahl ($n_1$, $n_2$, $n_3$, $n_4$) aufweist und wobei insbesondere für Kapazitätsfaktoren (X) sowie für Gesamtdruckverhältnisse ($\pi$), die nicht in der Tabelle aufgelistet sind, die entsprechenden Werte für die reduzierten Drehzahlen ($n_1$, $n_2$, $n_3$, $n_4$) des jeweiligen Verdichters ($V_1$, $V_2$, $V_3$, $V_4$) durch eine Interpolationsmethode ermittelt werden.

11. Verfahren nach Anspruch 9 oder 10, **dadurch gekennzeichnet, dass** die Kapazitätslinien ($X_{00}$, $X_{02}$, $X_{05}$, $X_{07}$, $X_{10}$) diejenigen Wertepaare aus reduziertem Massenstrom ($\dot{m}_1$, $\dot{m}_2$, $\dot{m}_3$, $\dot{m}_4$) und reduzierter Drehzahl ($n_1$, $n_2$, $n_3$, $n_4$) aufweisen, die bewirken, dass sich der Ist-Eintrittsdruck ($p_{ist}$) dem Soll-Eintrittsdruck ($p_{soll}$) angleicht, wenn die Regelungsfunktion (F) aus dem Modell-Gesamtdruckverhältnis ($\pi_{Model}$) und dem Kapazitätsfaktor (X) eine reduzierte Soll-Drehzahl ($n_1$, $n_2$, $n_3$, $n_4$) für jeden Verdichter ($V_1$, $V_2$, $V_3$, $V_4$), insbesondere aus der vorberechneten Tabelle, ermittelt und die Regelung mit den ermittelten reduzierten Drehzahlen ($n_1$, $n_2$, $n_3$, $n_4$) durchgeführt wird.

12. Verfahren nach einem der Ansprüche 9 bis 11, **dadurch gekennzeichnet, dass** die Kapazitätslinien ($X_{00}$, $X_{02}$, $X_{05}$, $X_{07}$, $X_{10}$) zwischen einer Pump- und Sperr-Kennlinie (S, C) liegen, wobei die Pump-Kennlinie (S) Betriebszustände des jeweiligen Verdichters ($V_1$, $V_2$, $V_3$, $V_4$) umfasst, bei denen, bei gegebener reduzierter Drehzahl ($n_1$, $n_2$, $n_3$, $n_4$) und einem gegebenen reduzierten Massenstrom ($\dot{m}_1$, $\dot{m}_2$, $\dot{m}_3$, $\dot{m}_4$), ein zu erreichendes Einzel-Druckverhältnis ($q_1$, $q_2$, $q_3$, $q_4$) nicht aufrechterhalten werden kann, und wobei die Sperr-Kennlinie (C) Betriebszustände des Verdichters ($V_1$, $V_2$, $V_3$, $V_4$) umfasst, bei denen bei einer bestimmten reduzierter Soll-Drehzahl ($n_1$, $n_2$, $n_3$, $n_4$) des jeweiligen Verdichters eine Verringerung des jeweiligen Einzel-Druckverhältnisses ($q_1$, $q_2$, $q_3$, $q_4$) keinen erhöhten reduzierten Massenstrom ($\dot{m}_1$, $\dot{m}_2$, $\dot{m}_3$, $\dot{m}_4$) durch den jeweiligen Verdichter ($V_1$, $V_2$, $V_3$, $V_4$) nach sich zieht.

**Claims**

1. Method for controlling speeds of compressors ($V_1$, $V_2$, $V_3$, $V_4$) arranged in series that are configured for compressing a fluid, in particular helium, comprising the steps of :

   - prescribing a setpoint entry pressure ($p_{setpoint}$) that the fluid is meant to have at an input of the compressor ($V_1$) arranged furthest upstream,
   - capturing an actual entry pressure ($p_{actual}$) of the fluid at the input of the compressor ($V_1$) arranged furthest upstream,
   - capturing an actual exit pressure ($p_4$) of the fluid at an output of the compressor ($V_4$) arranged furthest downstream,
   - ascertaining an actual total pressure ratio ($\pi_{actual}$), wherein the actual total pressure ratio ($\pi_{actual}$) is consistent with the quotient of the actual exit pressure ($p_4$) of the compressor ($V_4$) arranged furthest downstream and the actual entry pressure ($p_{actual}$) of the compressor ($V_1$) arranged furthest upstream,
   - determining a proportional integral value (PI) from the difference between the actual entry pressure ($\pi_{actual}$) and the setpoint entry pressure ($p_{setpoint}$),
   - determining a capacitance factor (X) from the proportional integral value (PI) and the actual total pressure ratio ($\pi_{actual}$),
   - ascertaining a model total pressure ratio ($\pi_{model}$) from the actual total pressure ratio ($\pi_{actual}$) and the capacitance factor (X),
   - determining a reduced setpoint speed ($n_1$, $n_2$, $n_3$, $n_4$) for each compressor ($V_1$, $V_2$, $V_3$, $V_4$), wherein the respective reduced setpoint speed ($n_1$, $n_2$, $n_3$, $n_4$) is determined as a function value of a control function (F) associated with the respective compressor ($V_1$, $V_2$, $V_3$, $V_4$), which control function assigns a reduced setpoint speed ($n_1$, $n_2$, $n_3$, $n_4$) to each pair of values comprising capacitance factor (X) and model total pressure ratio ($\pi_{model}$),
   - converting the reduced setpoint speeds ($n_1$, $n_2$, $n_3$, $n_4$) into setpoint speeds and adjusting the speed of each compressor ($V_1$, $V_2$, $V_3$, $V_4$) to the respectively associated setpoint speed.

2. Method according to Claim 1, **characterized in that** the proportional integral value (PI) is less than or equal to the sum of the in particular natural logarithm of a design total pressure ratio ($\pi_{design}$) and a blocking capacitance factor

($X_{blocking}$), wherein the blocking capacitance factor ($X_{blocking}$) is in particular one and wherein the design total pressure ratio ($\pi_{design}$) is the total pressure ratio ($\pi$) obtained when all compressors ($V_1$, $V_2$, $V_3$, $V_4$) in the series are operated at their design point, the design point of a compressor ($V_1$, $V_2$, $V_3$, $V_4$) defining in particular the operating state in which the respective compressor ($V_1$, $V_2$, $V_3$, $V_4$) has its highest efficiency.

3. Method according to Claim 1 or 2, **characterized in that** the capacitance factor (X) is consistent with the difference between the proportional integral value (PI) and the natural logarithm of the actual total pressure ratio ($\pi_{actual}$).

4. Method according to one of the preceding claims, **characterized in that** a maximum value and a minimum value ($X_{max}$, $X_{min}$) are defined for the capacitance factor (X), wherein in particular the maximum value ($X_{max}$) is between 0.8 and 1 and/or wherein the minimum value ($X_{min}$) is between 0 and 0.1.

5. Method according to Claim 4, **characterized in that** the model total pressure ratio ($\pi_{model}$) is consistent with the actual total pressure ratio ($\pi_{actual}$) multiplied by a saturation function dependent on the capacitance factor (X), wherein the saturation function is in particular 1 when the capacitance factor (X) is between the minimum value and the maximum value ($X_{min}$, $X_{max}$), and wherein the saturation function is consistent in particular with an exponential function of the difference between the capacitance factor (X) and the minimum value ($X_{min}$) when the capacitance factor (X) is lower than the minimum value ($X_{min}$), and wherein the saturation function is consistent in particular with an exponential function of the difference between the capacitance factor (X) and the maximum value ($X_{max}$) when the capacitance factor (X) is higher than the maximum value ($X_{max}$) .

6. Method according to Claim 5, **characterized in that** when the capacitance factor (X) is higher than the maximum value ($X_{max}$), the capacitance factor (X) is equated to the maximum value ($X_{max}$), in particular after the model total pressure ratio ($\pi_{model}$) has been determined, and **in that** when the capacitance factor (X) is lower than the minimum value ($X_{min}$), the capacitance factor (X) is equated to the minimum value ($X_{min}$), in particular after the model total pressure ratio ($\pi_{model}$) has been determined.

7. Method according to one of the preceding claims, **characterized in that** the exit temperature ($T_1$, $T_2$, $T_3$) of the fluid at the output of the respective compressor ($V_1$, $V_2$, $V_3$) is equal to the entry temperature ($T_1$, $T_2$, $T_3$) of the fluid at the input of the respective compressor ($V_2$, $V_3$, $V_4$) arranged downstream of the respective compressor ($V_1$, $V_2$, $V_3$) in the series, and **in that** the exit pressure ($p_1$, $p_2$, $p_3$) at the fluid at the output of the respective compressor ($V_1$, $V_2$, $V_3$) is equal to the entry pressure ($p_1$, $p_2$, $p_3$) of the fluid at the input of the respective compressor ($V_2$, $V_3$, $V_4$) arranged downstream of the respective compressor ($V_1$, $V_2$, $V_3$) in the series.

8. Method according to Claim 7, **characterized in that** the exit temperature ($T_1$, $T_2$, $T_3$, $T_4$) and the exit pressure ($p_1$, $p_2$, $p_3$, $p_4$) for each compressor ($V_1$, $V_2$, $V_3$, $V_4$) are ascertained from the entry pressure ($p_0$) and the entry temperature ($T_0$) of the compressor ($V_1$) arranged furthest upstream in the series, in particular using a Euler equation, in particular a turbo machine equation, wherein in particular the reduced speed ($n_1$, $n_2$, $n_3$, $n_4$) for each compressor ($V_1$, $V_2$, $V_3$, $V_4$) and the reduced mass current ($mA = \dot{m}_1, \dot{m}_2, \dot{m}_3, \dot{m}_4$) through the respective compressor ($V_1$, $V_2$, $V_3$, $V_4$) are ascertained as a function of the total pressure ratio ($\pi$) and in particular of the capacitance factor (X) of the series.

9. Method according to Claim 8, **characterized in that** multiple, in particular five, capacitance curves ($X_{00}$, $X_{02}$, $X_{05}$, $X_{07}$, $X_{10}$) for each compressor ($V_1$, $V_2$, $V_3$, $V_4$) are stipulated, wherein each capacitance curve ($X_{00}$, $X_{02}$, $X_{05}$, $X_{07}$, $X_{10}$) for each compressor ($V_1$, $V_2$, $V_3$, $V_4$) is a function of the total pressure ratio ($\pi$) and in particular a function of the reduced mass current ($\dot{m}_1$, $\dot{m}_2$, $\dot{m}_3$, $\dot{m}_4$) and of the reduced speed ($n_1$, $n_2$, $n_3$, $n_4$) of the respective compressor ($V_1$, $V_2$, $V_3$, $V_4$), and wherein the capacitance factor (X) along the respective capacitance curve ($X_{00}$, $X_{02}$, $X_{05}$, $X_{07}$, $X_{10}$) for each compressor ($V_1$, $V_2$, $V_3$, $V_4$) is constant.

10. Method according to Claim 9, **characterized in that** the control function (F) ascertains the reduced setpoint speed ($n_1$, $n_2$, $n_3$, $n_4$) from a precomputed table, wherein the table has the respective reduced speed ($n_1$, $n_2$, $n_3$, $n_4$) for each capacitance factor (X) situated on a capacitance curve ($X_{00}$, $X_{02}$, $X_{05}$, $X_{07}$, $X_{10}$) and for each total pressure ratio ($\pi$) and wherein, in particular for capacitance factors (X) and for total pressure ratios ($\pi$) that are not listed in the table, the applicable values for the reduced speeds ($n_1$, $n_2$, $n_3$, $n_4$) of the respective compressor ($V_1$, $V_2$, $V_3$, $V_4$) are ascertained using an interpolation method.

11. Method according to Claim 9 or 10, **characterized in that** the capacitance curves ($X_{00}$, $X_{02}$, $X_{05}$, $X_{07}$, $X_{10}$) have those pairs of values comprising the reduced mass current ($\dot{m}_1$, $\dot{m}_2$, $m_3$, $m_4$) and the reduced speed ($n_1$, $n_2$, $n_3$, $n_4$) that prompt the actual entry pressure ($p_{actual}$) to match the setpoint entry pressure ($p_{setpoint}$) when the control function (F) ascertains from the model total pressure ratio ($\pi_{model}$) and the capacitance factor (X) a reduced setpoint speed ($n_1$, $n_2$, $n_3$, $n_4$) for each compressor ($V_1$, $V_2$, $V_3$, $V_4$), in particular from the precomputed table, and the control is performed using the ascertained reduced speeds ($n_1$, $n_2$, $n_3$, $n_4$).

**12.** Method according to one of Claims 9 to 11, **characterized in that** the capacitance curves ($X_{00}$, $X_{02}$, $X_{05}$, $X_{07}$, $X_{10}$) are between a pump characteristic curve and a blocking characteristic curve (S, C), wherein the pump characteristic curve (S) comprises operating states of the respective compressor ($V_1$, $V_2$, $V_3$, $V_4$) in which, for a given reduced speed ($n_1$, $n_2$, $n_3$, $n_4$) and a given reduced mass current ($\dot{m}_1$, $\dot{m}_2$, $\dot{m}_3$, $\dot{m}_4$), a single pressure ratio ($q_1$, $q_2$, $q_3$, $q_4$) to be achieved cannot be maintained, and wherein the blocking characteristic curve (C) comprises operating states of the compressor ($V_1$, $V_2$, $V_3$, $V_4$) in which, for a particular reduced setpoint speed ($n_1$, $n_2$, $n_3$, $n_4$) of the respective compressor, a decrease in the respective single pressure ratio ($q_1$, $q_2$, $q_3$, $q_4$) does not entail an increased reduced mass current ($\dot{m}_1$, $\dot{m}_2$, $\dot{m}_3$, $\dot{m}_4$) through the respective compressor ($V_1$, $V_2$, $V_3$, $V_4$).

**Revendications**

**1.** Procédé de régulation des vitesses de rotation de compresseurs ($V_1$, $V_2$, $V_3$, $V_4$) montés en série, lesquels sont configurés pour compresser un fluide, notamment de l'hélium, comprenant les étapes suivantes :

- prédéfinition d'une pression d'entrée de consigne ($p_{soll}$) que doit présenter le fluide à une entrée du compresseur ($V_1$) qui est monté le plus loin en amont,
- détection d'une pression d'entrée réelle ($p_{ist}$) du fluide à l'entrée du compresseur ($V_1$) qui est monté le plus loin en amont,
- détection d'une pression de sortie réelle ($p_4$) du fluide à une sortie du compresseur ($V_4$) qui est monté le plus loin en aval,
- détermination d'un rapport de pression total réel ($\pi_{ist}$), le rapport de pression total réel ($\pi_{ist}$) correspondant au quotient de la pression de sortie réelle ($p_4$) du compresseur ($V_4$) qui est monté le plus loin en aval et de la pression d'entrée réelle ($p_{ist}$) du compresseur ($V_1$) qui est monté le plus loin en amont,
- définition d'une valeur proportionnelle-intégrale (PI) à partir de l'écart entre la pression d'entrée réelle ($p_{ist}$) et la pression d'entrée de consigne ($p_{soll}$),
- définition d'un facteur de capacité (X) à partir de la valeur proportionnelle-intégrale (PI) et du rapport de pression total réel ($\pi_{ist}$),
- détermination d'un modèle rapport de pression total ($\pi_{Model}$) à partir de la rapport de pression total réel ($\pi_{ist}$) et le facteur de capacité (X),
- détermination d'une vitesse de rotation de consigne réduite ($n_1$, $n_2$, $n_3$, $n_4$) pour chaque compresseur ($V_1$, $V_2$, $V_3$, $V_4$), la vitesse de rotation de consigne réduite ($n_1$, $n_2$, $n_3$, $n_4$) respective étant définie en tant que valeur de fonction d'une fonction de régulation (F) associée à l'un des compresseurs ($V_1$, $V_2$, $V_3$, $V_4$) respectifs, laquelle associe une vitesse de rotation de consigne réduite ($n_1$, $n_2$, $n_3$, $n_4$) à chaque paire de valeurs constituée du facteur de capacité (X) et d'un modèle rapport de pression total ($\pi_{Model}$),
- conversion des vitesses de rotation de consigne réduites ($n_1$, $n_2$, $n_3$, $n_4$) en vitesses de rotation de consigne et réglage de la vitesse de rotation de chaque compresseur ($V_1$, $V_2$, $V_3$, $V_4$) à la vitesse de rotation de consigne respectivement associée.

**2.** Procédé selon la revendication 1, **caractérisé en ce que** la valeur proportionnelle-intégrale (PI) est inférieure ou égale à la somme du logarithme, notamment naturel, d'un rapport de pression total théorique ($\pi_{Design}$) et d'un facteur de capacité de blocage ($X_{sperr}$), le facteur de capacité de blocage ($X_{sperr}$) étant notamment égal à un et le rapport de pression total théorique ($\pi_{Design}$) étant le rapport de pression total ($\pi$) qui est obtenu lorsque tous les compresseurs ($V_1$, $V_2$, $V_3$, $V_4$) de la série fonctionnent à leur point théorique, le point théorique d'un compresseur ($V_1$, $V_2$, $V_3$, $V_4$) définissant notamment l'état de fonctionnement avec lequel le compresseur ($V_1$, $V_2$, $V_3$, $V_4$) respectif présente son rendement le plus élevé.

**3.** Procédé selon la revendication 1 ou 2, **caractérisé en ce que** le facteur de capacité (X) correspond à la différence entre la valeur proportionnelle-intégrale (PI) et le logarithme naturel du rapport de pression total réel ($\pi_{ist}$).

**4.** Procédé selon l'une des revendications précédentes, **caractérisé en ce qu'**une valeur maximale et minimale ($X_{max}$, $X_{min}$) est définie pour le facteur de capacité (X), la valeur maximale ($X_{max}$) étant notamment comprise entre 0,8 et 1 et/ou la valeur minimale ($X_{min}$) étant notamment comprise entre 0 et 0,1.

**5.** Procédé selon la revendication 4, **caractérisé en ce que** le modèle rapport de pression total ($\pi_{Model}$) correspond au rapport de pression total réel ($\pi_{ist}$) multiplié par une fonction de saturation dépendante du facteur de capacité (X), la fonction de saturation étant notamment de 1 lorsque le facteur de capacité (X) est compris entre les valeurs minimale et maximale ($X_{min}$, $X_{max}$), et la fonction de saturation correspondant notamment à une fonction exponentielle de la différence entre le facteur de capacité (X) et la valeur minimale ($X_{min}$) lorsque le facteur de capacité (X) est inférieur à la valeur minimale ($X_{min}$), et la fonction de saturation correspondant notamment à une fonction exponentielle de la différence entre le facteur de capacité (X) et la valeur maximale ($X_{max}$) lorsque le facteur de capacité (X) est supérieur à la valeur maximale ($X_{max}$).

**6.** Procédé selon la revendication 5, **caractérisé en ce que** lorsque le facteur de capacité (X) est supérieur à la valeur maximale ($X_{max}$), le facteur de capacité (X) est fixé égal à la valeur maximale ($X_{max}$), notamment après avoir défini le modèle rapport de pression total ($\pi_{Model}$), et **en ce que** lorsque le facteur de capacité (X) est inférieur à la valeur minimale ($X_{min}$), le facteur de capacité (X) est fié égal à la valeur minimale ($X_{min}$), notamment après avoir défini le modèle rapport de pression total ($\pi_{Model}$).

**7.** Procédé selon l'une des revendications précédentes, **caractérisé en ce que** la température de sortie ($T_1$, $T_2$, $T_3$) du fluide à la sortie du compresseur ($V_1$, $V_2$, $V_3$) correspondant est égale à la température d'entrée ($T_1$, $T_2$, $T_3$) du fluide à l'entrée du compresseur ($V_2$, $V_3$, $V_4$) de la série respectivement monté en aval du compresseur ($V_1$, $V_2$, $V_3$) correspondant, et **en ce que** la pression de sortie ($p_1$, $p_2$, $p_3$) du fluide à la sortie du compresseur ($V_1$, $V_2$, $V_3$) correspondant est égale à la pression d'entrée ($p_1$, $p_2$, $p_3$) du fluide à l'entrée du compresseur ($V_2$, $V_3$, $V_4$) de la série respectivement monté en aval du compresseur ($V_1$, $V_2$, $V_3$) correspondant.

**8.** Procédé selon la revendication 7, **caractérisé en ce que** la température de sortie ($T_1$, $T_2$, $T_3$, $T_4$) et la pression de sortie ($p_1$, $p_2$, $p_3$, $p_4$) pour chaque compresseur ($V_1$, $V_2$, $V_3$, $V_4$) sont déterminées à partir de la pression d'entrée ($p_0$) et de la température d'entrée ($T_0$) du compresseur ($V_1$) de la série qui est monté le plus en amont, notamment à l'aide d'une équation d'Euler, notamment d'une équation de turbomachine, la vitesse de rotation réduite ($n_1$, $n_2$, $n_3$, $n_4$) pour chaque compresseur ($V_1$, $V_2$, $V_3$, $V_4$) et le débit massique réduit ($\dot{m}_1$, $\dot{m}_2$, $\dot{m}_3$, $\dot{m}_4$) à travers le compresseur ($V_1$, $V_2$, $V_3$, $V_4$) correspondant étant notamment déterminés en tant que fonction du rapport de pression total ($\pi$) et notamment du facteur de capacité (X) de la série.

**9.** Procédé selon la revendication 8, **caractérisé en ce que** plusieurs, notamment cinq, lignes de capacités ($X_{00}$, $X_{02}$, $X_{05}$, $X_{07}$, $X_{10}$) sont fixées pour chaque compresseur ($V_1$, $V_2$, $V_3$, $V_4$), chaque ligne de capacités ($X_{00}$, $X_{02}$, $X_{05}$, $X_{07}$, $X_{10}$) pour chaque compresseur ($V_1$, $V_2$, $V_3$, $V_4$) étant une fonction du rapport de pression total ($\pi$) et notamment une fonction du débit massique réduit ($\dot{m}_1$, $\dot{m}_2$, $\dot{m}_3$, $\dot{m}_4$) ainsi que de la vitesse de rotation réduite ($n_1$, $n_2$, $n_3$, $n_4$) du compresseur ($V_1$, $V_2$, $V_3$, $V_4$) correspondant, et le facteur de capacité (X) étant constant le long de la ligne de capacités ($X_{00}$, $X_{02}$, $X_{05}$, $X_{07}$, $X_{10}$) pour chaque compresseur ($V_1$, $V_2$, $V_3$, $V_4$).

**10.** Procédé selon la revendication 9, **caractérisé en ce que** la fonction de régulation (F) détermine la vitesse de rotation réduite ($n_1$, $n_2$, $n_3$, $n_4$) à partir d'un tableau précalculé, le tableau présentant la vitesse de rotation réduite ($n_1$, $n_2$, $n_3$, $n_4$) pour chaque facteur de capacité (X) qui se trouve sur une ligne de capacités ($X_{00}$, $X_{02}$, $X_{05}$, $X_{07}$, $X_{10}$) et pour chaque rapport de pression total ($\pi$), et les valeurs correspondantes pour les vitesses de rotation réduites ($n_1$, $n_2$, $n_3$, $n_4$) du compresseur ($V_1$, $V_2$, $V_3$, $V_4$) correspondant étant calculées par une méthode d'interpolation, notamment pour les facteurs de capacité (X) et les rapports de pression totaux ($\pi$) qui ne figurent pas dans le tableau.

**11.** Procédé selon la revendication 9 ou 10, **caractérisé en ce que** les lignes de capacités ($X_{00}$, $X_{02}$, $X_{05}$, $X_{07}$, $X_{10}$) présentent les paires de valeurs composées du débit massique réduit ($\dot{m}_1$, $\dot{m}_2$, $\dot{m}_3$, $\dot{m}_4$) et de la vitesse de rotation réduite ($n_1$, $n_2$, $n_3$, $n_4$) qui ont pour effet que la pression d'entrée réelle ($p_{ist}$) s'aligne sur la pression d'entrée de consigne ($p_{soll}$) lorsque la fonction de régulation (F) détermine, à partir du modèle rapport de pression total ($\pi_{Model}$) et du facteur de capacité (X), une vitesse de rotation réduite ($n_1$, $n_2$, $n_3$, $n_4$) pour chaque compresseur ($V_1$, $V_2$, $V_3$, $V_4$), notamment à partir du tableau précalculé, et la régulation est effectuée avec les vitesses de rotation réduites ($n_1$, $n_2$, $n_3$, $n_4$) déterminées.

**12.** Procédé selon l'une des revendications 9 à 11, **caractérisé en ce que** les lignes de capacités ($X_{00}$, $X_{02}$, $X_{05}$, $X_{07}$, $X_{10}$) se trouvent entre une courbe caractéristique de pompe et de blocage (S, C), la courbe caractéristique de pompe (S) comprenant les états de fonctionnement du compresseur ($V_1$, $V_2$, $V_3$, $V_4$) respectif auxquels, à une vitesse de rotation réduite ($n_1$, $n_2$, $n_3$, $n_4$) donnée et un débit massique réduit ($\dot{m}_1$, $\dot{m}_2$, $\dot{m}_3$, $\dot{m}_4$) donné, un rapport de pression individuel ($q_1$, $q_2$, $q_3$, $q_4$) à atteindre ne peut pas être maintenu, et la courbe caractéristique de blocage (C) comprenant les états de fonctionnement du compresseur ($V_1$, $V_2$, $V_3$, $V_4$) auxquels, à une vitesse de rotation de consigne réduite

($n_1$, $n_2$, $n_3$, $n_4$) définie, une réduction du rapport de pression individuel ($q_1$, $q_2$, $q_3$, $q_4$) respectif n'entraîne pas un débit massique réduit ($\dot{m}_1$, $\dot{m}_2$, $\dot{m}_3$, $\dot{m}_4$) accru à travers le compresseur ($V_1$, $V_2$, $V_3$, $V_4$) correspondant.

Fig. 1

Fig. 2

Fig. 3

Fig. 4

Fig. 5

Fig. 6

Fig. 7

Fig. 8

Fig. 9

Fig. 10

Fig. 11:

Fig. 12

Fig. 13

Fig. 14

Fig. 15

Fig. 16

Fig. 17

Fig. 18

**Eingabe-Parameter**

$p_{ist}$     Ist-Eintrittsdruck

$p_{soll}$     Soll-Eintrittsdruck

$\pi_{ist}$     Ist-Gesamtdruckverhältnis

**Vordefinierte Parameter**

$X_{sperr} = 1,$

$X_{pump} = 0,$

$X_{min} = X_{pump} + 0,05$        Minimalwert

$X_{max} = X_{sperr} - 0,10$        Maximalwert

$\pi_{Design}$     Design-Gesamtdruckverhältnis

$$prop = -k(p_{soll} - p_{ist})$$

$$int_{t=n+1} = int_{t=n} + prop \cdot \frac{\Delta t}{t}$$

$$PI = prop + int_{n+1}$$

**wenn** $PI < \ln(\pi_{Design}) + X_{sperr}$
**dann** $X = PI - \ln(\pi_{ist})$
**sonst** $X = \ln(\pi_{Design}) + X_{sperr} - \ln(\pi_{ist})$

**wenn** $X < X_{min}$
**dann** $\ln(\pi_{Model}) = \ln(\pi_{ist}) + 0,5 \cdot (X - X_{min})$ und    $X = X_{min}$

**wenn** $X > X_{max}$
**dann** $\ln(\pi_{Model}) = \ln(\pi_{ist}) + 0,5 \cdot (X - X_{max})$ und    $X = X_{max}$

**wenn** $X_{min} \leq X \leq X_{max}$
**dann** $\ln(\pi_{Model}) = \ln(\pi_{ist})$

Regelungsfunktion F bestimmt aus $X$ und $\ln(\pi_{Model})$ die reduzierte Soll-Drehzahl $n_1, n_2, n_3, n_4$ für jeden Verdichter $V_1, V_2, V_3, V_4$.

Umwandlung der reduzierten Soll-Drehzahlen $n_{red}$ in Soll-Drehzahlen $n_{abs}$:

$$n_{abs} = n_{red} \cdot n_{Design} \cdot \sqrt{\frac{T_{ist}}{T_{Design}}}$$

Fig. 19

**EP 3 167 196 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005178134 A
- US 4640665 A
- DE 19933202